# EUROPÄISCHE PATENTSCHRIFT

(11) **EP 1 890 908 B1**
(45) Veröffentlichungstag und Bekanntmachung des Hinweises auf die Patenterteilung: **14.07.2010**
(21) Anmeldenummer: 06761646.6
(22) Anmeldetag: 30.05.2006
(51) Int. Cl.: B60N 2/66

(54) **HANDVERSTELLUNG FÜR EINE LORDOSENSTÜTZE EINES FAHRZEUGSITZES**
MANUAL ADJUSTMENT OF A BACK SUPPORT ON A VEHICLE SEAT
SYSTEME DE REGLAGE MANUEL CONÇU POUR UN APPUI LOMBAIRE D'UN SIEGE DE VEHICULE

(30) Priorität: 30.05.2005 DE 102005025122; 30.05.2005 DE 202005008565 U
(43) Veröffentlichungstag der Anmeldung: 27.02.2008
(73) Patentinhaber: Brose Fahrzeugteile GmbH & Co. KG, Coburg, 96450 Coburg (DE)
(72) Erfinder: SCHECK, Georg, 96479 Weitramsdorf (DE); MACHT, Alwin, 96250 Ebensfeld (DE); PRAUSE, Andreas, 96450 Coburg (DE)
(74) Vertreter: Baumgärtel, Gunnar
(86) Internationale Anmeldenummer: PCT/DE2006/000925
(87) Internationale Veröffentlichungsnummer: WO 2006/128431

(56) Entgegenhaltungen:
- WO-A-96/33640
- DE-U1- 20 100 018
- DE-U1- 20 313 925
- US-A- 6 056 360

## Beschreibung

Die Erfindung betrifft eine Lordosenstütze eines Fahrzeugsitzes nach dem Oberbegriff des Anspruchs 1.

Eine derartige Handverstellung umfasst eine Seilrolle, die auf einer Drehachse gelagert ist und in eine Antriebsrichtung und in eine der Antriebsrichtung entgegen gerichtete Abtriebsrichtung drehbar ist. Der Seilrolle ist ein Zugmittel zugeordnet, das teilweise auf der Seilrolle aufgerollt ist. Durch Drehung der Seilrolle in An- bzw. Abtriebsrichtung kann die Länge des Teils des Zugmittels eingestellt werden, der auf der Seilrolle aufgerollt ist, sowie die Länge des Teils des Zugmittels, das von der Seilrolle abgerollt ist.

Das Zugmittel ist ausgebildet und dazu vorgesehen, mit einer Lordosenstütze eines Fahrzeugsitzes gekoppelt zu werden. In einer Einbaustellung bewirkt eine Drehung der Seilrolle in An- bzw. Abtriebsrichtung eine Veränderung der Länge des von der Rolle abgerollten Teils des Zugmittels und dadurch ein Verstellen der Lordosenstütze.

Eine solche Lordosenstütze ist z. B. aus dem deutschen Gebrauchsmuster DE 203 13 925 bekannt. Die aus dem Gebrauchsmuster bekannte Lordosenstütze eines Kraftfahrzeugsitzes kann durch Bewegung eines Gleiters ver- bzw. eingestellt werden, der entlang einer Führungsschiene bewegt wird. Der Gleiter kann z. B. von dem Zugmittel einer derartigen Handverstellung bewegt werden.

Bekannte Handverstellungen für Lordosestützen weisen dabei entweder zwei Seilrollen auf, die die Lordosenstütze in eine Antriebs- und Abtriebsrichtung bewegen können, oder relativ kompliziert aufgebaute Handverstellungen mit eingebautem Rechts- und Linksgewinde.

Eine weitere Handverstellung für eine Lordosenstütze eines Kraftfahrzeugsitzes ist in der WO-A-96/33640 beschrieben.

Aufgabe der vorliegenden Erfindung ist es, eine Handverstellung für eine Lordosenstütze bereitzustellen, die sich durch eine einfache Handhabung verstellen lässt und dabei insbesondere möglichst kompakt aufgebaut ist.

Diese Aufgabe wird erfindungsgemäß durch eine Handverstellung mit den Merkmalen des Anspruchs 1 gelöst.

Danach wirkt auf die Seilrolle eine Vorspannung ein, die ein Drehmoment der Seilrolle in Abtriebsrichtung bewirkt. Die Länge des Teils des Zugmittels, das auf die Seilrolle aufgerollt ist, ist dadurch verkürzbar, dass die Seilrolle dem Drehmoment in Abtriebsrichtung nachgibt und sich in Abtriebsrichtung dreht. In Antriebsrichtung kann die Länge des aufgerollten Teils des Zugmittels durch Aufrollen des Zugmittels auf die Seilrolle verstellt werden. Dadurch wird eine Verwendung eines Rechts- und eines Linksgewindes für die Handverstellung bzw. die Verwendung zweier Seilrollen überflüssig, was die erfindungsgemäße Handverstellung besonders kostengünstig macht.

Weiterhin weist die Handverstellung eine Sperre auf, die in einer Sperrstellung die Drehung der Seilrolle in Abtriebsrichtung hemmt. Die Hemmwirkung der Sperre ist dabei groß genug, um gegen das durch die Vorspannung erzeugte Drehmoment die Seilrolle an einer Drehbewegung zu hindern. Durch die Sperre wird verhindert, dass sich die Seilrolle aufgrund der Vorspannung in eine unerwünschte Position verdreht. In der Sperrstellung bleibt die für die Handverstellung eingestellte Position bzw. Stellung der Lordosenstütze erhalten.

Erfindungsgemäß weist die Sperre zwei keilförmig zueinander verlaufende bremsfläche auf, zwischen denen die Seilrolle angeordnet ist. In der Sperrstellung steht die Seilrolle in Reibungskontakt mit beiden Bremsflächen. Hierzu wird die Seilrolle relativ zu den Bremsflächen in Richtung Keilspitze bewegt. Die Seilrolle ist dann in der Sperrstellung zwischen beiden Bremsflächen verkeilt. Durch den Reibungskontakt wird die Drehung der Seilrolle in Abtriebsrichtung gehemmt. Die Stärke der Hemmung ist dabei durch die eine Reibungskraft zwischen Seilrolle und Bremsfläche bestimmenden Größen, wie z. B. dem Reibungskoeffizient, bestimmt. Insbesondere kann die Seilrolle in der Sperrstellung durch die Vorspannung gegen die Bremsflächen gedrückt werden. Steht die Seilrolle z. B. durch Anliegen einer Zugkraft an dem Zugmittel unter Vorspannung, wirkt dadurch eine Kraft in einer Richtung auf die Seilrolle, entlang der das Zugmittel von der Seilrolle wegführt. In der Sperrstellung wird diese Kraft ausgenutzt, um die Seilrolle gegen die Bremsflächen zu drücken.

Besonders bevorzugt ist die Seilrolle durch Kraftübertragung über das Zugmittel vorgespannt. Das Zugmittel ist dabei derart vorgespannt, dass es ein Drehmoment der Seilrolle in Abtriebsrichtung bewirkt. Durch die Vorspannung des Zugmittels wird das Zugmittel bei Drehung der Seilrolle in Abtriebsrichtung automatisch von der Seilrolle abgewickelt, während es bei Drehung in Antriebsrichtung wieder aufgerollt wird. Da durch eine Einstellung der Länge des auf- bzw. abgerollten Teils des Zugmittels das Verstellen des mit dem Zugmittel koppelbaren Kraftfahrzeugteils (beispielsweise eine Lordosenstütze) gesteuert wird, hat ein Benutzer der Handverstellung beim Drehen der Seilrolle die Kontrolle über die Einstellung des Kraftfahrzeugteites.

Dabei ist das Zugmittel bevorzugt mit einem Element (z.B. einem Gleiter) einer Lordosenverstelleinrichtung zum Verstellen der Lordosenstütze gekoppelt, wobei auf das Element eine Vorspannung einwirkt, die von dem Zugmittel auf die Seilrolle übertragen wird. Somit muss ein elastisches Spannelement, das die Vorspannung erzeugt, nicht Bestandteil der Handverstellung sein. Es kann vielmehr direkt auf das Element der Lordosenverstellung einwirken, da die Vorspannung über das Zugmittel von dem Element auf die Seilrolle übertragen wird. Die Richtung, entlang der das Element vorgespannt ist, ist der Richtung, entlang der das Zugmittel mit dem Element gekoppelt ist, vorzugsweise entgegengesetzt, um einen möglichst verlustfreien Spannungsübertrag zu gewährleisten.

In einer Ausführungsform erfolgt eine Drehung der Seilrolle in Antriebsrichtung immer gegen dar von der Vorspannung bewirkte Drehmoment in Abtriebsrichtung. Die Drehrichtung der Seilrolle richtet sich also danach, ob das durch die Vorspannung auf die Seilrolle einwirkendes Drehmoment oder ein durch Drehung der Seilrolle in Antriebsrichtung erfolgtes Drehmoment größer ist.

Eine Drehung der Seilrolle in Antriebsrichtung erfolgt entgegen einer zur Verstellung der Lordosenstütze aufzubringenden Verstellbewegungsreibung und ist daher zumindest durch eine entsprechende Reibungskraft gehemmt. Die Sperre hemmt in der Sperrstellung auch eine Drehung der Seilrolle in Abtriebsrichtung. Somit wird jegliche Drehung der Seilrolle um ihre Drehachse durch die Sperre abgebremst.

Dabei verursacht bevorzugt die Vorspannung, dass die Handverstellung in die Sperrstellung gelangt. Durch die Vorspannung wirkt eine Kraft auf die Seilrolle als Teil der Handverstellung. Diese wird dazu ausgenutzt, die Handverstellung aus einer frei verstellbaren Position in die Sperrstellung zu überführen.

In einer Ausführungsform ist vorgesehen, dass die Handverstellung automatisch die Sperrstellung einnimmt, wenn die Handverstellung in einer Nichtbetätigungsstellung ruht. Hierbei bezeichnet die Nichtbetätigungsstellung einen Zustand der Handverstellung, den diese einnimmt, wenn sie nicht zum Verstellen der Lordosenstütze betätigt wird.

Nicht nur über die Bremsflächen, sondern auch über eine zur Anlage an die Bremsflächen eingerichtete und vorgesehene Außenfläche der Seilrolle, die in der Sperrstellung in Reibungskontakt mit den Bremsflächen steht, kann die Bremswirkung beeinflusst werden. Z. B. erhöht eine Außenfläche (oder eine Bremsfläche) aus einem elastischen Material, wie beispielsweise Gummi, den Reibungskoeffizienten zwischen Seilrolle (Außenfläche) und Bremsflächen, während ein steifes und glattes Material, wie z. B. Metall oder glatter Kunststoff, den Reibungskoeffizienten absenkt.

In einer besonders bevorzugten Ausführungsform ist vorgesehen, dass die Außenfläche im Querschnitt eine rundliche oder eine polygonartige Kontur aufweist. Die Kanten der Polygonstruktur verlaufen dabei entlang der Drehachse, d.h., quer zur Antriebs- bzw. Abtriebsrichtung der Seilrolle. Je nach Anzahl der Kanten des Polygons wird festgelegt, welchen Drehwinkel die Seilrolle relativ zu den Bremsflächen in der Sperrstellung einnehmen kann. In der Sperrstellung liegt dabei eine flacher, durch zwei Kanten der Polygonstruktur begrenzter Bereich der Außenfläche an den Bremsflächen an. Bei einer polygonartigen Kontur der Außenfläche kann demnach eine Verstellung der Seilrolle lediglich in diskreten Stufen (Drehwinkeln) erfolgen, da immer ein flächiger Bereich der im Querschnitt polygonförmigen Außenseite auf einer Bremsfläche zu liegen kommt. Demgegenüber ist bei einer rundlichen (kreisförmigen) Kontur der Außenfläche ein kontinuierliches Verstellen der Seilrolle möglich.

Die keilförmig angeordneten Bremsflächen sind vorzugsweise an einer der Seilrolle zugewandten Innenseite des Gehäuses ausgebildet, das die Seilrolle im Querschnitt (entlang einer senkrecht auf der Drehachse stehenden Querschnittsebene) umgibt.

Die Bremswirkung zwischen der Seilrolle (Außenfläche) und den Bremsflächen wird sowohl durch Reib- als auch durch Formschluss erzielt. Um bei geringer Seilkraft und plötzlich auftretender auf das Zugmittel einwirkender Zugkraft ein Durchrutschen der Sperre, d.h., ein Durchrutschen der Seilrolle in Bezug auf die Bremsfläche zu unterbinden, ist in einer Variante der Erfindung zusätzlich ein gegen die Seilrolle elastisch vorgespanntes Vorspannelement vorgesehen, das dazu ausgebildet ist, die Seilrolle gegen die beiden aufeinander zulaufenden Bremsflächen (V-Kontur) zu drücken, um ein Herausbewegen der Seilrolle aus der Sperrstellung zu verhindern. Das Vorspannelement erzeugt also eine Grundvorspannung des Systems Seilrolle / Bremsfläche.

In einem Ausführungsbeispiel liegt das Vorspannelement den beiden keilförmig angeordneten Bremsflächen quer zur Drehachse gegenüber. Vorzugsweise ist das Vorspannelement an einer der Seilrolle quer zur Drehachse gegenüberliegenden bzw. die Seilrolle im Querschnitt umgebenden Innenseite des Gehäuses der Handverstellung festgelegt.

Bevorzugt ist das Vorspannelement als eine flächige Blattfeder ausgebildet, die gegen die Seilrolle gewölbt sein kann. In einer Variante der Erfindung ist die Blattfeder zum Festlegen der Blattfeder an der Innenseite des Gehäuses mit einem entlang der Drehachse erstreckten ersten Randbereich in eine entlang der Drehachse am Gehäuse ausgebildete erste Nut und mit einem dem ersten Randbereich quer zur Drehachse gegenüberliegenden zweiten Randbereich in eine entlang der Drehachse am Gehäuse vorgesehene zweite Nut eingeführt. Die beiden Nuten umgreifen hierbei die beiden Randbereiche der Blattfeder jeweils im Querschnitt. Hierdurch kann die Blattfeder auf einfache Art und Weise (ohne weitere Befestigungsmittel) am Gehäuse festgelegt werden.

In einer besonders bevorzugten Ausführungsform ist die Sperre durch Betätigung der Handverstellung lösbar. Wird die Seilrolle in An- oder Abtriebsrichtung bewegt, löst sich die Sperre dabei von selbst. Die Handverstellung wird dadurch aus der Sperrstellung gebracht und lässt sich drehen. Dies kann z. B. dadurch bewirkt werden , dass eine Bremsfläche der Sperre an der Innenseite eines Gehäuses angeformt ist, welches die Handverstellung umschließt bzw. begrenzt. Eine durch Betätigung auf die Seilrolle einwirkende Drehkraft eines Betätigers würde dann die Sperrwirkung überwinden.

Zur Betätigung der Seilrolle ist vorzugsweise ein Handrad vorgesehen, das so mit der Seilrolle gekoppelt ist, dass ein Drehen des Handrads eine Drehung der Seilrolle bewirkt. Handrad und Seilrolle sind dabei vorzugsweise um dieselbe Achse drehbar und benachbart zueinander angeordnet und verbindungssteif miteinander gekoppelt.

Wird dabei das Handrad nicht betätigt, insbesondere nicht gedreht, ruht die Handverstellung in einer Nichtbetätigungsstellung. In der Nichtbetätigungsstellung setzt die Sperrwirkung der Sperre ein.

Als bevorzugtes Zugmittel ist ein Bowdenzug vorgesehen, dessen Sehne an der Seilrolle befestigt ist und auf die Seilrolle auf- und abgewickelt werden kann. Dabei ist das Hüllrohr des Bowdenzugs gegen ein Gehäuse der Handverstellung abgestützt. Eine Kraftausübung des Hüllrohres relativ zur Sehne kann somit - in Abhängigkeit der Relativrichtung - eine Drehung der Seilrolle relativ zum Gehäuse bewirken.

In einer Ausführungsform der Erfindung ist ein drehfest mit der Seilrolle verbundener Anschlag der Seilrolle vorgesehen, der beim Drehen der Seilrolle aus einer ersten Endposition in eine zweite Endposition zum Begrenzen des Verstellweges mit einem in Bezug auf die Drehachse ruhenden Gegenanschlag der Handverstellung zusammenwirkt, der vorzugsweise am Gehäuse der Handverstellung ausgebildet ist.

Besonders bevorzugt wirkt der Anschlag über ein zusätzliches um die Drehachse drehbares Kopplungsglied mit dem Gegenanschlag zusammen. Das Kopplungsglied weist hierzu vorzugsweise einen mit dem Anschlag zusammenwirkenden ersten Anschlagsbereich und einen mit dem Gegenanschlag zusammenwirkenden zweiten Anschlagsbereich auf, so dass beim Drehen der Seilrolle in die zweite Endposition der Anschlag der Seilrolle mit dem ersten Anschlagsbereich in Eingriff gelangt und das Kopplungsglied zum Verlängern des Verstellweges in die zweite Endposition mitnimmt.

Hierdurch wird der Verstellweg der Seilrolle zwischen der ersten und der zweiten Endposition auf einfache Weise verlängert, da die Seilrolle gegenüber einer üblichen Seilrolle, deren Anschlag direkt mit einem Gegenanschlag zusammenwirkt, so dass ein Verstellweg von annähernd 360° erzielbar ist, zunächst in Bezug auf das Kopplungsglied um einen Drehwinkel von maximal annähernd 360° gedreht werden kann und anschließend, das Kopplungsglied mitnehmend, zusammen mit dem Kopplungsglied um einen weiteren Drehwinkel von maximal annähernd 360° in die zweite Endposition gedreht werden kann, in der das Kopplungslied zum Begrenzen dieser Drehbewegung mit seinem zweiten Anschlagsbereich am Gegenanschlag anschlägt. Somit ist insgesamt ein verlängerter Verstellweg von beinahe 720° erzielbar.

Bevorzugt umläuft das Kopplungsglied die Drehachse zumindest abschnittsweise, und zwar insbesondere ringförmig, d.h., in sich geschlossen. Hierbei umgreift dass Kopplungsglied einen Teil der Seilrolle im Querschnitt, d.h., quer zur Drehachse.

In einem Ausführungsbeispiel ragen der erste und der zweite Anschlagsbereich von einander abgewandten Seiten in einander entgegen gesetzten Richtungen entlang der Drehachse vom Kopplungsglied ab. Hierdurch kann die Seilrolle - ebenso wie das Kopplungsglied in Bezug auf die Drehachse (oder ein Gehäuse der Seilrolle) - um annähernd 360° in Bezug das Kopplungsglied verdreht werden, so dass insgesamt (aufgrund der drehbaren Lagerung des Kopplungsgliedes) ein Verstellweg von annähernd 720° möglich ist.

Vorzugsweise liegt der erste Anschlagsbereich dem zweiten Anschlagsbereich quer zur Drehachse gegenüber. D.h., bei einem ringförmigen (in Bezug auf die Drehachse rotationssymmetrischen) Kopplungsglied wird bei einer Rotation des Kopplungsgliedes um 180° um die Drehachse die Position des ersten Anschlagsbereichs in einer senkrecht zur Drehachse orientierten Erstreckungsebene des Kopplungsgliedes in die Position des zweiten Anschlagsbereichs überführt und umgekehrt.

In einem Ausführungsbeispiel der Erfindung ist vorgesehen, dass der Anschlag entlang der Drehachse von der Seilrolle absteht, so dass der Anschlag beim Drehen der Seilrolle in die zweite Endposition gegen den ersten Anschlagsbereich des Kopplungsgliedes drücken kann, um das Kopplungsglied entlang einer Drehrichtung der Seilrolle mitzunehmen, so dass sich das Kopplungsglied zusammen mit der Seilrolle dreht.

In einer Variante der Erfindung ist das Kopplungsglied um die Drehachse drehbar im Gehäuse gelagert, und zwar insbesondere über ein Gleitlager. Bevorzugt weist das Gehäuse hierbei eine Führung zum Führen des ersten Anschlagsbereiches entlang des Verstellweges auf, an der der erste Anschlagsbereich entlang gleiten kann. Bevorzugt steht der Gegenanschlag entlang der Drehachse von der Führung ab, so dass der zweite Anschlagsbereich beim Drehen des Kopplungsgliedes in die zweite Endposition am Gegenanschlag anschlagen kann, um die Drehung des Kopplungsgliedes zu begrenzen.

Die Erfindung wird nachfolgend anhand von in Figuren dargestellten Ausführungsformen beschrieben. Es zeigen:
- Figur 1: eine perspektivische Ansicht eines Trägers mit einer Lordosenverstelleinrichtung zur Einstellung der Lage einer Lordosenstütze für eine Rückenlehne eines Kraftfahrzeugsitzes;
- Figur 2: den Träger der Figur 1 in schematischer Darstellung;
- Figur 3: eine schematische Darstellung der Kopplung der Lordosenverstelleinrichtung des Trägers aus Figur 1 mit einer Handverstellung;
- Figur 4: eine Handverstellung für die Lordosenverstelleinrichtung der Figur 1 in schematischer Darstellung mit einer abgerundeten Bremskontur;
- Figur 5A: eine schematische Darstellung einer Handverstellung für eine Lordosenstütze mit einer polygonartigen Bremsstruktur unter Vorspannung;
- Figur 5B: die Handverstellung der Figur 5A bei Drehung in Antriebsrichtung;
- Figur 6: eine perspektivische Ansicht einer Handverstellung für eine Lordosenstütze mit einem Handrad;
- Figur 7: eine Ansicht eines Lehnengestells mit einer verstellbaren Lordosenstütze in einer Explosionsdarstellung;
- Figur 8: eine perspektivische Explosionsansicht einer Abwandlung der der in der Figur 6 gezeigten Handverstellung, bei der ein Anschlag einer Seilrolle über ein drehbar gelagertes Kopplungsglied mit einem Gegenanschlag des Gehäuses der Handverstellung zum Begrenzen des Verstellweges der Seilrolle zusammenwirkt;
- Figur 9: eine weitere perspektivische Explosionsansicht der in der Figur 8 gezeigten Handverstellung;
- Figur 10: eine weitere perspektivische Explosionsansicht der in den Figuren 7 und 8 dargestellten Handverstellung;
- Figur 11: eine perspektivische Explosionsansicht einer Variante der erfindungsgemäßen Handverstellung, mit einem zusätzlichen Vorspannelement, welches derart gegen die Seilrolle vorgespannt ist, dass diese nicht ungewollt aus einer Sperrstellung geraten kann;
- Figur 12: eine perspektivische Ansicht der in der Figur 11 gezeigten Handverstellung, und
- Figur 13: eine Draufsicht auf die in den Figuren 11 und 12 gezeigte Handverstellung.

In den Figuren sind einander ähnliche oder identische Merkmale mit dem gleichen Bezugszeichen gekennzeichnet.

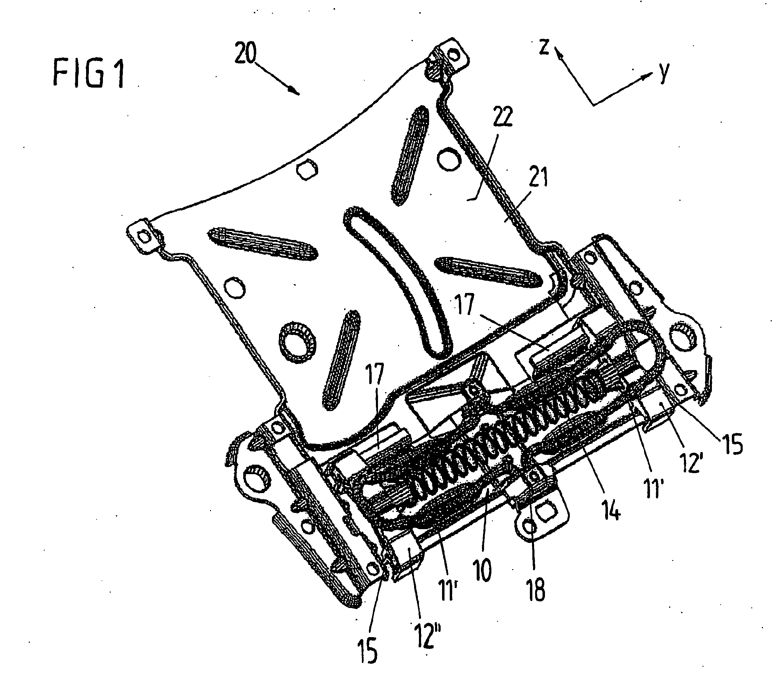

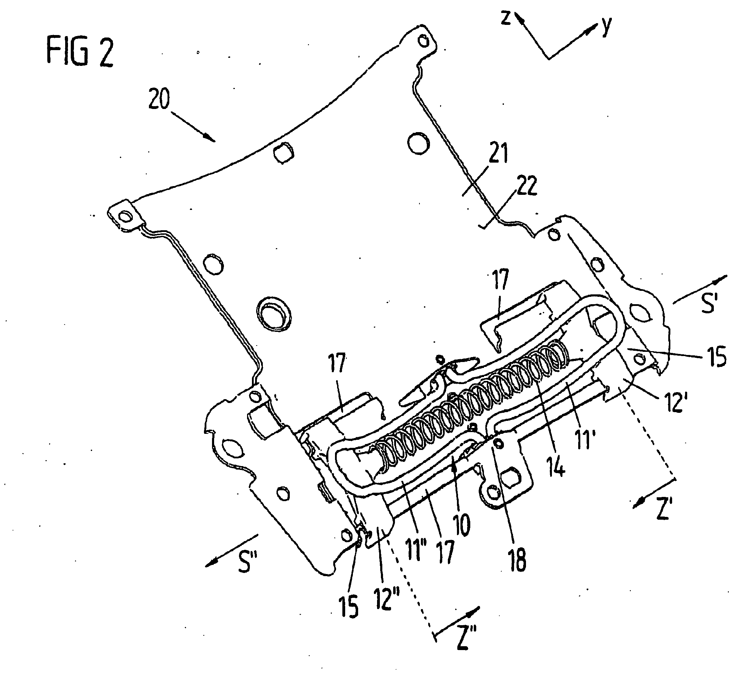

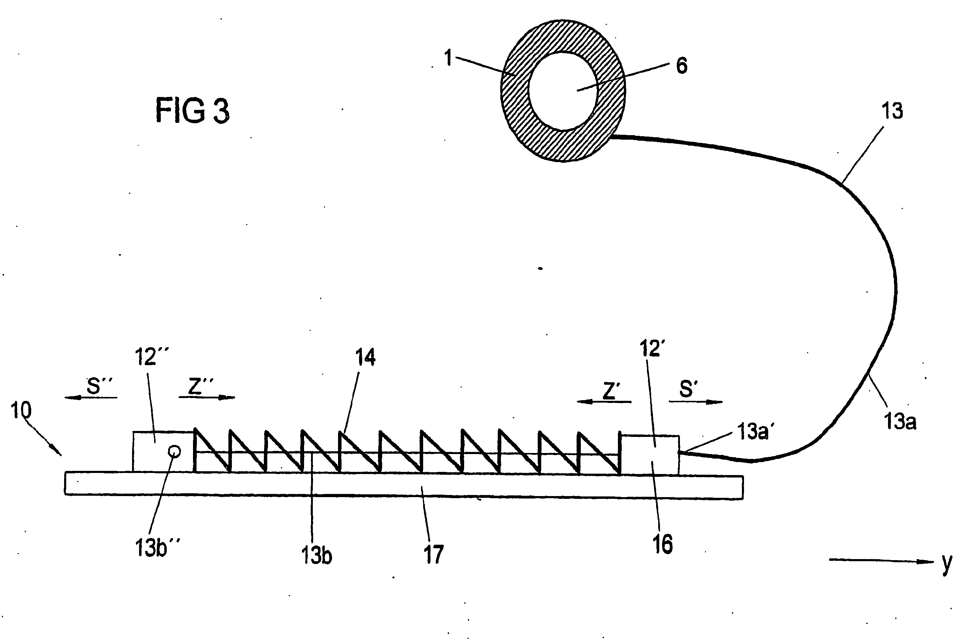

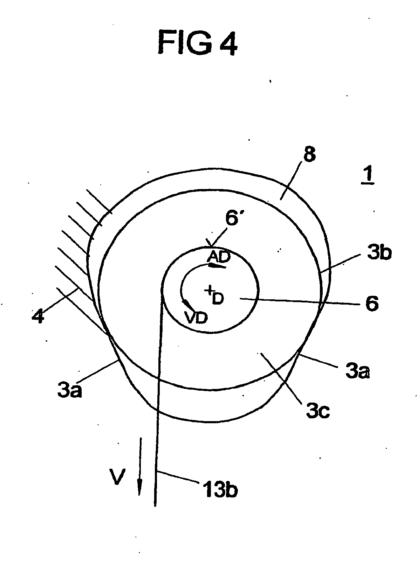

Anhand der Figuren 1 und 2 wird nachfolgend ein Ausführungsbeispiel einer Lordosenstütze für eine Rückenlehne eines Kraftfahrzeugsitzes erläutert werden. Die Lordosenstütze wird durch Betätigung eines Handrads verstellt, das nachfolgend anhand der Figuren 4, 5A, 5B und 6 erläutert werden wird. Die Figur 3 zeigt das Zusammenwirken der Handverstellung aus einer der Figuren 4 bis 6 mit der Lordosenstütze der Figur 1 bzw. 2.

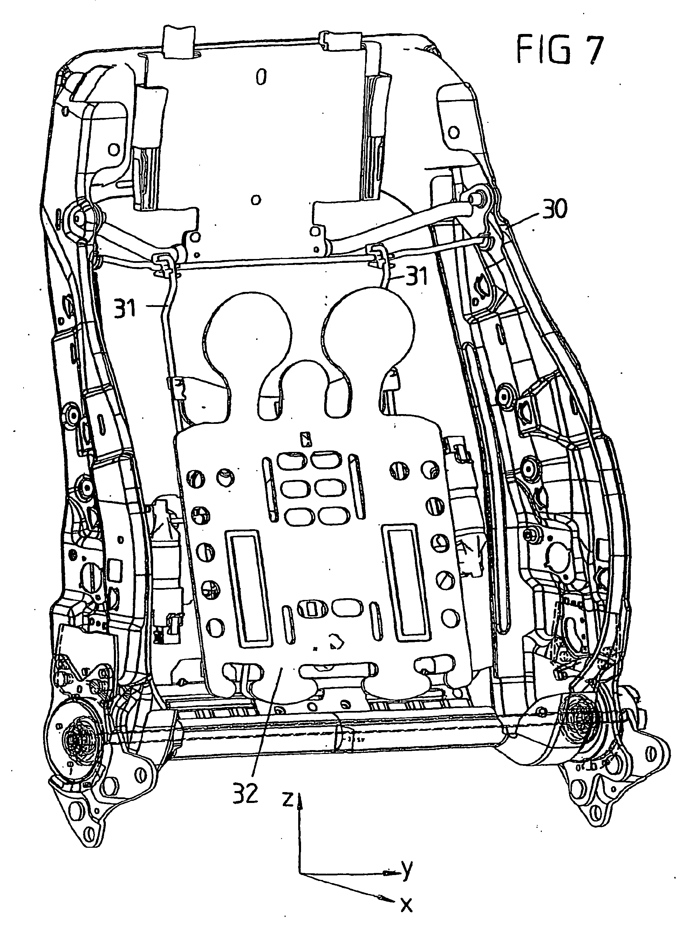

Die Figur 7 weist eine tragende Struktur einer Rückenlehne in Form eines Lehnengestells 30 und zwei voneinander beabstandete, sich jeweils in Lehnenlängsrichtung z erstreckende Streben 31 auf, vor denen eine Lordosenstütze 32 angeordnet ist. Diese ist beispielsweise mittels in den Figuren nicht dargestellter Federelemente an dem Lehnengestell 30 gelagert.

Unter der Lehnenlängsrichtung z wird vorliegend diejenige Richtung verstanden, entlang der sich bei bestimmungsgemäßem Gebrauch der Rückenlehne an einem Kraftfahrzeugsitz die Wirbelsäule einer auf dem entsprechenden Fahrzeugsitz sitzenden' Person erstreckt. Bei aufrechter Einstellung der Rückenlehne, d.h., wenn diese im Wesentlichen senkrecht vom Sitzpolster absteht, verläuft die Lehnenlängsrichtung z im Wesentlichen entlang der vertikalen Fahrzeugachse z. Das Lehnengestell 30 sowie die Lordosenstütze 32 liegen dabei jeweils im Wesentlichen in einer Ebene, die durch die Lehnenlängsachse z sowie die senkrecht hierzu verlaufende horizontale Querachse y aufgespannt wird.

In den Figuren 1 und 2 ist ein Träger 20 gezeigt, der ein Trägerblech 21 und eine darauf angeordnete Lordosenverstelleinrichtung 10 aufweist. Das Trägerblech 21 wird mittels geeigneter Fixierungsmittel an den in Lehnenlängsrichtung z erstreckten Streben 31 befestigt. Das Trägerblech 21 erstreckt sich dabei entlang einer Erstreckungsebene des Lehnengestells und entlang der horizontalen Querrichtung y (senkrecht zur Lehnenlängsrichtung z) von der einen Strebe 31 zur anderen Strebe 31. Die Lordosenverstelleinrichtung 10 weist etwa mittig bezüglich der Querausdehnung in Querrichtung y ein Drehlager 18 auf, in dem zwei Stützbügel 11', 11" schwenkbar angelenkt sind.

Jeder der beiden Stützbügel 11', 11" erstreckt sich jeweils von seinen beiden schwenkbar an dem Drehlager 18 angelenkten Enden zu einem der beiden seitlichen Ränder des Trägerblechs 21. Die U-förmigen Stützbügel 11', 11" weisen eine Krümmung auf, so dass sie jeweils eine Rampe mit variabler Krümmung definieren, die mit jeweils einem zugehörigen Gleiter 12', 12" zusammenwirkt.

Die beiden Gleiter 12', 12" sind an jeweils einer an dem Trägerblech 21 angeordneten bzw. ausgebildeten Gleiterführung 17 in Erstreckungsrichtung der Schenkel der U-förmigen Stützbügel 11', 11" geführt. Sie untergreifen dabei die beiden Stützbügel 11', 11" an deren gekrümmten Abschnitten und wirken mit diesen rampenartig nach dem Keilprinzip zusammen. Die beiden Gleiter 12', 12" sind entlang der jeweils zugeordneten Gleiterführung 17 einander entgegengesetzt entlang der horizontalen Querrichtung y mittels eines nicht dargestellten Handantriebs bewegbar. Durch Verschieben der Gleiter 12', 12" entlang der Richtung y parallel zur Erstreckungsebene des Lehnengestells 30 kann mittels der Stützbügel 11', 11" eine Einstellung der Lage bzw. Wölbung der Lordosenstütze 32 entlang einer Richtung x senkrecht zur Erstreckungsebene (yz Ebene) des Lehnengestells 30 vorgenommen werden. Dies ist darauf zurückzuführen, dass die Gleiter 12', 12" mit entsprechend gekrümmten Abschnitten der Stützbügel 11', 11" nach dem Keilprinzip zusammenwirken, so dass eine Bewegung der Gleiter 12', 12" entlang der Richtung y in eine Bewegung der Stützbügel 11 (nämlich in einer Schwenkbewegung um die Drehlager 18 der Stützbügel 11) umgesetzt wird, welche eine Komponente in x-Richtung senkrecht zur Erstreckungsebene des Lehnengestells 30 aufweist.

Durch die symmetrische Anordnung der beiden Stützbügel 11', 11" und der zugeordneten Gleiter 12', 12" bezüglich einer in Längslehnenrichtung z verlaufenden Symmetrieachse wird dabei eine symmetrische, gleichmäßige Wölbung bzw. Verstellung der Lordosenstütze 32 sichergestellt. Die Stützbügel 11', 11" dienen somit als Verstellelemente zum Verstellen der Position der Lordosenstütze.

Die beiden Gleiter 12', 12" werden von einem Spannelement 14 vorgespannt. Das Spannelement 14 ist im Ausführungsbeispiel als eine Spiralfeder ausgebildet, die sich entlang der Lehnenquerrichtung y erstreckt und die beiden Gleiter 12' und 12" entlang dieser Richtung zu den Streben 31 hin vorspannt (Spannrichtungen S' und S"). Das Spannelement 14 bewirkt eine Vorspannung der beiden Gleiter 12', 12" in einander entgegengesetzte Richtungen, den Spannrichtungen S' und S".

Die Vorspannung bewirkt eine auf die Gleiter 12' und 12" wirkende Schubkraft.

An dem Seitenrand des Trägerblechs 21 sind Gleiteranschläge 15 vorgesehen, die die Gleiterführung 17 nach außen hin begrenzen und verhindern, dass die Gleiter 12' und 12" über den Gleiteranschlag 15 hinaus bewegt werden.

Die Gleiter 12' und 12", die Gleiterführung 17, die Gleitabschläge 15, das Spannelement 14 und das Drehlager 18 bilden zusammen die Lordosenverstelleinrichtung 10, die auf der Vorderseite 22 des Trägerblechs 21 angeordnet ist, und die in einer Einbaustellung dem Rücken eines Benutzers zugewandt ist.

Eine Bewegung des Gleiters 12' entgegen seiner Vorspannrichtung S' ist nur gegen die Vorspannung möglich, die vom Spannelement 14 auf den Gleiter 12' ausgeübt wird (Analoges gilt für Gleiter 12").

In der Figur 3 ist schematisch dargestellt, wie die Gleiter 12' und 12" der Lordosenverstelleinrichtung 10 der Figur 2 verstellt und bewegt werden. Durch die Längsachse des Spannelements 14 verläuft eine Sehne 13b eines Bowdenzugs 13 parallel zur Lehnenquerrichtung y und parallel zur Ebene des Lehnengestells.

Der Bowdenzug 13 dient als Zugmittel zum Übertragen einer Zugkraft, die von einer Handverstellung 1 über den Bowdenzug 13 auf die Gleiter 12' und 12" übertragen wird. Der Bowdenzug 13 weist dabei ein Hüllrohr 13a auf, das sich am Gleiter 12' abstützt und dort endet. Die Sehne 13b des Bowdenzugs 13 ist länger als das Hüllrohr 13a ausgebildet und verläuft im Inneren des Hüllrohrs 13a. Am gleiterseitigen Ende 13a' des Hüllrohrs 13a ragt die Sehne 13b aus dem Hüllrohr 13a hinaus und ist so angeordnet, dass sie den Gleiter 12' durchdringt und sich entlang des Spannelements 14 bis zum zweiten Gleiter 12' erstreckt. Die Sehne 13b ist mit ihrem gleiterseitigen Ende 13b" an dem zweiten Gleiter 12" befestigt.

Das gleiterseitige Ende 13b" der Sehne 13b.kann durch Drehung der Handverstellung 1 relativ zu dem gleiterseitigen Ende 13a' des Hüllrohrs 13a bewegt werden. Die Stellung der Handverstellung 1 bestimmt die Länge der Sehne 13b, die über das gleiterseitige Ende 13a' des Hüllrohres 13a hinausragt und somit den Abstand zwischen den beiden Gleitern 12' und 12".

Durch Verkürzen des Abstandes der gleiterseitigen Enden 13a' und 13b" zueinander, was durch Drehung einer Seilrolle 6 der Handverstellung 1 in Antriebsrichtung erfolgt, wird eine Zugkraft auf den Gleiter 12" in einer Zugrichtung Z" ausgeübt, die entgegengesetzt zur Spannrichtung S" des Gleiters 12" verläuft und gegen die Spannung des Spannelements 14 wirkt. Gleichzeitig wird das gleiterseitige Ende 13a' des Hüllrohres 13a entgegen der Spannrichtung S' gegen den Gleiter 12' gedrückt und bewegt den Gleiter 12' in Zugrichtung Z' auf den Gleiter 12" zu. Durch Ausübung einer über den Bowdenzug 13 übertragenen Zugkraft auf den Gleiter 12' und 12" werden diese aufeinander zu in Zugrichtung Z' bzw. Z" bewegt. Gleichzeitig werden sie durch die Gleiterführung 17 geführt.

Der Gleiter 12' dient somit als Stützelement 16 für das gleiterseitige Ende 13a' des Hüllrohres 13a.

Die Bewegung der Gleiter 12' und 12" aufeinander zu erfolgt durch Übertragung einer Zugkraft über den Bowdenzug 13, eine Bewegung der Gleiter voneinander weg erfolgt mit Hilfe der Spannkraft des Spannelements 14. Somit können die Gleiter mit Hilfe eines einzigen Zugmittels 13 gegeneinander bewegt werden.

In einer weiteren erfindungsgemäßen Ausführungsform, die in den Figuren nicht dargestellt ist, kann auch nur ein Gleiter vorgesehen sein, der sich entlang der Lehnenlängsachse z bewegt. Er ist durch ein Spannelement gegen ein Stützelement vorgespannt. Das Verstellprinzip funktioniert analog zur Figur 3 mit dem Unterschied, dass der Gleiter 12' nicht beweglich ist, sondern an seiner Position als Stützelement 16 fixiert ist. In diesem Falle ist auch nur ein Stützbügel (11') als Verstellelement für die Lordosenstütze vorgesehen. Alternativ können zwei parallel zueinander entlang der Lehnenlängsrichtung z verlaufende Gleiter vorgesehen sein, durch deren Bewegung die Stellung jeweils eines Verstellbügels verstellt wird.

Die Figur 4 zeigt eine schematische Darstellung einer Handverstellung 1. Sie dient zur Übertragung einer Zugkraft über ein Zugmittel 13 (Figur 4 zeigt die Sehne 13b des Bowdenzugs 13) auf den Gleiter 12' bzw. 12" (vgl. Figur 3).

Kernstück der Handverstellung 1 ist eine Seilrolle 6, die um eine Drehachse D drehbar gelagert ist. Figur 4 zeigt einen Schnitt durch die Seilrolle 6 senkrecht zur Drehachse D. Auf einer Außenfläche der Seilrolle 6, die die Seilrolle 6 kreisförmig begrenzt, verläuft eine Aufrollfläche 6'. Die Aufrollfläche 6' dient zur Aufnahme und zum Aufrollen der Sehne 13b des Zugmittels 13 aus Figur 3. Die Sehne 13b ist mit dem Ende, das dem gleiterseitigen Ende 13b" (vgl. Figur 3) gegenüberliegt an der Seilrolle 6 befestigt. Bei Drehung der Seilrolle 6 wird die Sehne 13b auf die Aufrollfläche 6' aufgerollt bzw. je nach Drehrichtung von ihr abgerollt. Durch die Drehwinkelposition der Seilrolle 6 wird eingestellt, wie viel Prozent der Sehne 13b auf der Seilrolle 6 auf- und wie viel davon abgerollt sind. Die Seilrolle 6 weist eine Bremsscheibe 3c auf, die ebenfalls drehbar um die Drehachse D gelagert ist. Die Bremsscheibe 3c und die Seilrolle 6 sind verwindungssteif miteinander verbunden und können nicht relativ zueinander verdreht werden. Sie können entweder aus einem einzigen Stück bestehen oder zweistückig ausgebildet sein. Die Seilrolle 6 kann wie die Bremsscheibe 3c scheibenförmig ausgebildet sein.

Die Bremsscheibe 3c weist eine der Drehachse D abgewandte und die Drehachse D umlaufende Außenfläche 3b auf, die in einer Sperrstellung der Handverstellung 1 in Reibungskontakt mit einer Bremsfläche 3a steht. Im Ausführungsbeispiel der Figur 4 sind zwei Bremsflächen 3a vorgesehen, die keilförmig zueinander verlaufen. Der gedachte Schnitt der beiden Bremsflächen 3a verläuft dabei parallel zur Drehachse D und liegt der Drehachse D entlang des Verlaufs der Sehne 13b gegenüber.

Die Bremsflächen 3a sind an einer der Seilrolle 6 quer zur Drehachse D zugewandten Innenseite eines Gehäuses 4 der Handverstellung 1 vorgesehen und begrenzen eine Gehäuseaussparung 8 des Gehäuses 4, in der die Seilrolle 6 angeordnet ist. In der Sperrstellung der Handverstellung 1 gemäß der Figur 4 wird die Bremsscheibe 3c mit ihrer Außenfläche 3b gegen die beiden Bremsflächen 3a gedrückt und zwischen ihnen verkeilt.

Die Sehne 13b führt von der Seilrolle 6 entlang einer Verlaufsrichtung V weg und ist **-** wie in Figur 3 gezeigt - an dem Gleiter 12" befestigt, auf den eine Vorspannung in der Richtung S" wirkt, die von dem Spannelement 14 erzeugt wird. Die aus der Federkraft des Spannelements 14 resultierende Spannkraft überträgt sich vom Gleiter 12" über die Sehne 13b auf die Seilrolle 6 der Handverstellung 1 der Figur 4. Die Vorspannung bewirkt also eine Kraft auf die Seilrolle 6 in Richtung der Verlaufsrichtung V der Sehne 13b. Durch die Beabstandung der Aufrollfläche 6' von der Drehachse D bewirkt die Vorspannung ein Drehmoment auf die Seilrolle 6 um die Drehachse D in Abtriebsrichtung VD.

Eine Verkürzung des von der Seilrolle 6 abgerollten Teils der Sehne 13b kann durch Drehung der Seilrolle 6 in Antriebsrichtung erreicht werden, während die Vorspannung dafür sorgt, dass die Sehne 13b bei Drehung in Abtriebsrichtung von der Seilrolle abgewickelt wird. Hierdurch ist ein Verstellen der Gleiterposition auf der Gleiterführung 17 (vgl. Fig. 1) durch ein einzige gewindelose Seilrolle möglich. Bei einer Drehung der Seilrolle 6 wird entweder die Reibungskraft zwischen der Außenfläche 3b und den Bremsflächen 3a durch Anlegen einer Drehkraft überwunden oder die Seilrolle 6 um ein kurzes Stück entgegen der Verlaufsrichtung V bewegt, so dass die Außenfläche 3b nicht mehr in Kontakt, d.h., in Eingriff mit der Bremsfläche 3a steht.

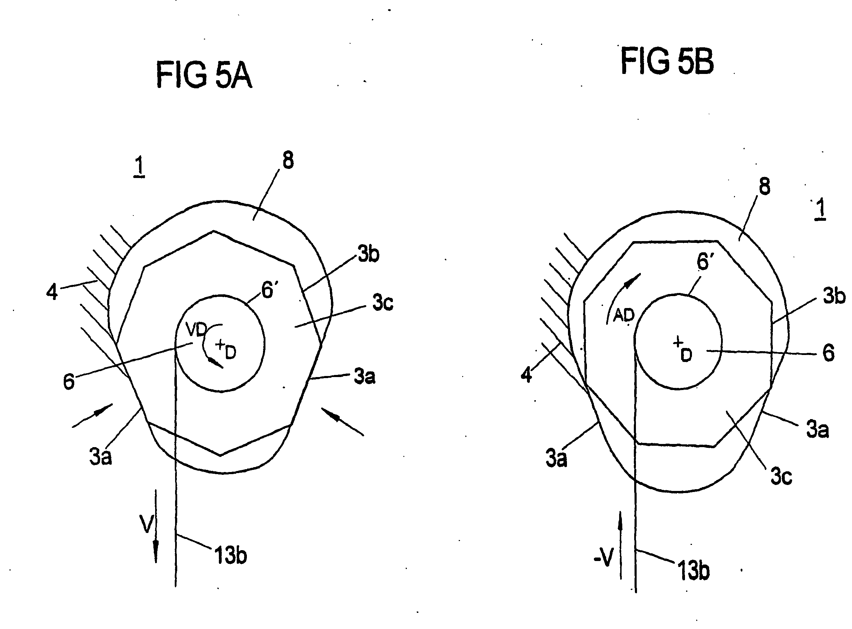

Die Figuren 5A und 5B zeigen eine Ausführungsvariante zur Handverstellung 1 der Figur 4. Während in der Figur 4 die Querschnittskontur (die entsprechende Querschnittsebene verläuft senkrecht zur Drehachse D) der Außenfläche 3b der Bremsscheibe 3c glatt ausgebildet ist, ist die Kontur der Außenfläche 3b der Figur 5 polygonartig ausgebildet und weist entlang des Umfangs der Bremsscheibe 3c mehrere Ecken auf. Zwischen den Ecken verläuft die Kontur (Bremskontur) der Außenfläche 3b geradlinig.

In der in Figur 5A gezeigten Sperrstellung liegen zwei flächige Bereiche der Außenfläche 3b an den Bremsflächen 3a an. Für ein Verdrehen der Seilrolle 6 muss nun nicht nur die Reibungskraft überwunden werden, sondern auch die Seilrolle 6 relativ zum Gehäuse 4 bewegt werden. Obwohl entlang der Verlaufsrichtung V über die Sehne 13b eine Zugkraft auf der Seilrolle 6 wirkt, dreht sie sich nicht, sondern bleibt in ihrer Sperrstellung.

In Figur 5B wird die Seilrolle 6 in Antriebsrichtung AD gedreht, so dass eine Zugkraft in negativer Verlaufsrichtung V auf die Sehne 13b übertragen wird. Durch die Anzahl der Polygonecken der Bremskontur 3b wird die Anzahl der verschiedenen Sperrstellungen festgelegt. Je mehr Polygonecken die Bremsscheibe 3c aufweist, in umso mehr Stufen kann die Lordosenstütze verstellt werden. Die kreisförmige Ausbildung der Bremsscheibe 3c im Ausführungsbeispiel der Figur 4 resultiert in einer stufenlosen Einstellung.

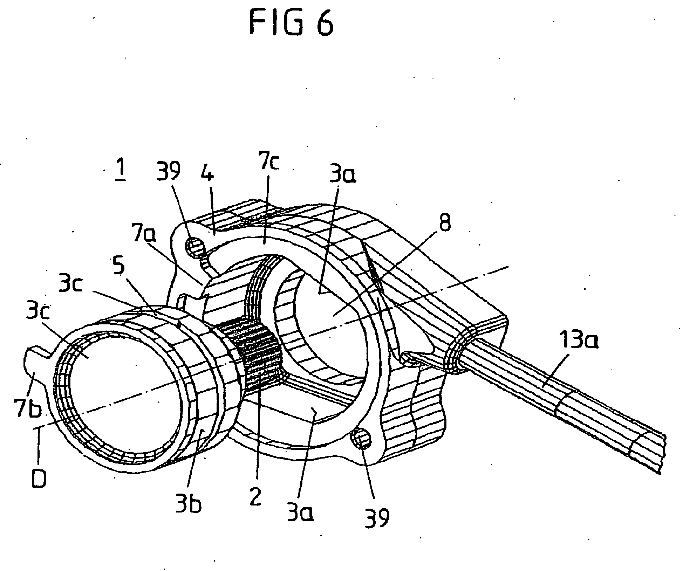

Figur 6 zeigt ein weiteres Ausführungsbeispiel einer erfindungsgemäßen Handverstellung 1 in einer Explosionsdarstellung. Die Außenfläche 3b ist wieder im Querschnitt polygonartig ausgebildet (Bremskontur). An der Seilrolle 6 ist neben den Bremsscheiben 3c auch ein Handrad 2 verwindungssteif relativ zur Seilrolle 6 befestigt. Es kann von einem Sitzbenutzer zur Verstellung der Lordosenstütze betätigt werden, indem es um die Drehachse D gedreht wird.

Zwischen den Bremsscheiben 3c ist eine Seilnut 5 ausgebildet, die zur Aufnahme der Sehne eines Bowdenzugs dient, dessen Hüllrohr 13a gegen das Gehäuse 4 der Handverstellung 1 abgestützt ist. Die Sehne 13b des Bowdenzugs 13 wird in der Seilnut 5 auf die Aufrollfläche 6' der Seilrolle 6 aufgewickelt (in Figur 6 nicht zu sehen). Beim Drehen der Seilrolle 6 in Antriebsrichtung AD und somit beim Aufwickeln der Sehne 13b wird eine Zugkraft bereitgestellt, die entlang der Sehne 13b immer in die gleiche Richtung wirkt.

An einer der Bremsscheiben 3c ist ein Anschlag 7b ausgebildet, der bei Drehung entlang einer Führung 7c geführt wird. Die Führung 7c ist als Aussparung im Gehäuse 4 ausgebildet und wird von einem Gegenanschlag 7a unterbrochen, der zur Begrenzung des Drehwinkels dient, um den die Seilrolle 6 gedreht werden kann. Dabei dient der Anschlag 7b sowohl zur Begrenzung des Verstellweges bei Drehung der Seilrolle 6 in Antriebsrichtung AD als auch bei Drehung der Seilrolle 6 in Abtriebsrichtung VD. Der maximale Verstellweg beträgt dabei annähernd 360°.

Zum Festlegen des Gehäuses 4 an einem Träger der Handverstellung 1 sind an dem Gehäuse 4 zwei Durchgangsöffnungen 39 vorgesehen, die entlang der Drehachse D verlaufen und einander quer zur Drehachse D gegenüberliegen. In diese Durchgangsöffnungen 39 können Schrauben oder ähnliche Befestigungsmittel eingeführt und am Träger der Handverstellung 1 festgelegt werden.

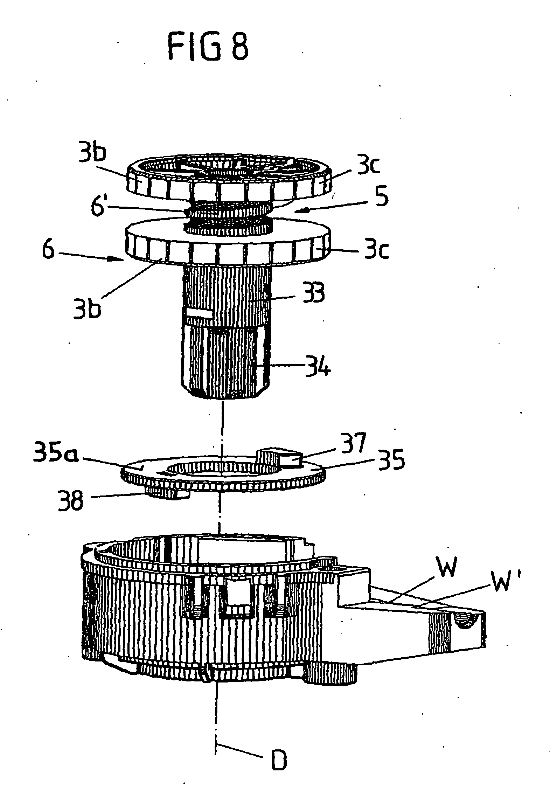

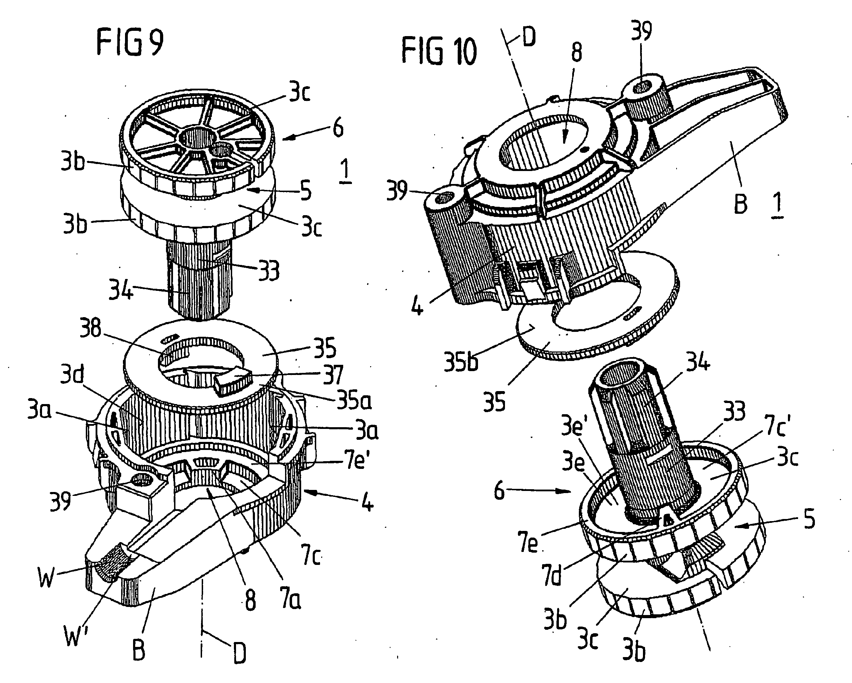

Figur 8 zeigt im Zusammenhang mit den Figuren 9 und 10 eine Explosionsansicht einer Abwandlung der in der Figur 6 gezeigten Handverstellung 1. Zum Verstellen eines Kraftfahrzeugteils, insbesondere einer Lordosenstütze eines Kraftfahrzeugsitzes, ist eine Seilrolle 6 vorgesehen, die um eine Drehachse D drehbar in einem Gehäuse 4 gelagert ist. Auf die Seilrolle 6 kann entsprechend den Figuren 3, 4, 5A und 5B eine Zugmittel in Form einer Sehne 13 eines Bowdenzuges aufgerollt sein, welches zum Koppeln der Handverstellung 1 mit einer Verstelleinrichtung, insbesondere einer Lordosenverstelleinrichtung 10 (vgl. Figuren 1 bis 3) dient. Dabei ist ein freier Endabschnitt des die Sehne 13b umgebenden Hüllrohres 13a in einer Aussparung W eines vom Gehäuse 4 abstehenden Bereichs B des Gehäuses 4 festgelegt, so dass sich ein freies Ende des Hüllrohres 13a an einem Widerlager W' abstützen kann, das durch eine stufenartige Verengung der Aussparung W gebildet wird, entlang der die aus dem Hüllrohr 13 a herausragende Sehne 13b des Bowdenzuges in das Gehäuse 4 geführt ist, wo sie auf einer Aufrollfläche 6' (vgl. Figuren 4, 5A und 5B) abschnittsweise aufgerollt und über einen freien Endbereich des auf die Aufrollfläche 6' aufgerollten Teiles der Sehne 13b an der Seilrolle 6 befestigt ist. Hierzu kann dieser freie Endbereich beispielsweise verbreitert sein und in eine an der Seilrolle 6 ausgebildete Aussparung eingreifen, so dass die Seilrolle 6 eine an der Sehne 13b angreifende Zugkraft aufnehmen kann.

Die Seilrolle 6 umfasst eine entlang der Drehachse D erstreckte Welle 33 sowie zwei die Welle 33 umlaufende Bremsscheiben 3c gemäß der Figur 6, die entlang der Drehachse D zueinander beabstandet zu beiden Seiten der die Welle 33 umlaufenden Aufrollfläche 6' (vgl. Figuren 4, 5A und 5B) von der Welle 33 abstehen und dabei die zwischen den beiden Bremsscheiben 3c umlaufende Seilnut 5 bilden (vgl. Figur 6), die zur Aufnahme des auf die Seilrolle 6 aufgerollten Teils der Sehne 13b dient.

Die Seilrolle 6 ist entlang der Drehachse D mit einem freien Endbereich 34 der Welle 33 voran in eine mit der Drehachse D fluchtende, durchgängige Gehäuseaussparung 8 des Gehäuses 4 eingeführt derart, dass der freie Endbereich 34 der Welle 33 entlang der Drehachse D aus dem Gehäuse 4 herausgeführt ist und die Seilrolle 6, und zwar die beiden senkrecht zur Welle 33 erstreckten Bremsscheiben 3c samt Seilnut 5 im Querschnitt vom Gehäuse 4 umgeben sind. Dabei sind die Außenseiten 3b der Bremsscheiben 3c gemäß der Figur 6 einer der Seilrolle 6 zugewandten Innenseite 3d des Gehäuses 4 zugewandt und weisen gemäß Figur 6 in einer quer zur Drehachse D verlaufenden Querschnittsebene eine kreisförmige, polygonartige Kontur auf. Oder anders gesagt, die Außenflächen 3b der beiden Bremsscheiben 3c setzen sich aus planen Flächensegmenten zusammen, die jeweils mit einem benachbarten Flächensegment eine Kante ausbilden, d.h., zueinander angewinkelt sind.

Die Außenflächen 3b sind auf diese Weise dazu ausgebildet gemäß den Figuren 5A und 5B in einer Sperrstellung der Seilrolle 6 mit zueinander keilförmig angewinkelten Bremsflächen 3a, die an der Innenseite 3d des Gehäuses 4 vorgesehen sind, in Eingriff zu sein.

Zum Betätigen der Handverstellung 1, und zwar durch Drehen der Seilrolle, kann auf den freien Endbereich 34 der Welle 33 ein Handrad aufgeschoben werden (in den Figuren 8 bis 10 nicht gezeigt). Damit das Handrad auf einfache Weise drehfest mit der Welle 33 verbindbar ist, sind am freien Endbereich 34 der Welle 33 entlang der Drehachse D erstreckte Ausnehmungen ausgebildet, in die Formschlussbereiche des Handrades zum drehfesten Festlegen des Handrades an der Welle 33 eingreifen können.

Wird die Seilrolle 6 durch entsprechendes Betätigen des Handrades 2 (in den Figuren 8 bis 10 nicht gezeigt) aus der Sperrstellung herausbewegt, kann die Seilrolle 6 in einer Antriebsrichtung AD und einer der Antriebsrichtung AD entgegen gesetzten Abtriebsrichtung VD (vgl. Figuren 4, 5A und 5B) zum Verstellen der Lordosenverstelleinrichtung 10 bzw. der Lordosenstütze 32 gemäß der Figuren 1 bis 3 zwischen einer ersten und einer zweiten Endposition hin und her gedreht werden.

Zum Begrenzen des von der ersten Endposition bis zur zweiten Endposition verlaufenden Verstellweges weist die Seilrolle 6 einen entlang der Drehachse D von der Seilrolle 6 abstehenden Anschlag 7d auf, der an einer dem Gehäuse 4 zugewandten Innenseite 3e derjenigen Bremsscheibe 3c ausgebildet ist, die entlang der Drehachse D eine geringere Beabstandung zum freien Endbereich 34 der Welle 33 aufweist. Diese Bremsscheibe 3c wird im Folgenden auch als innere Bremsscheibe 3c bezeichnet werden.

Der Anschlag 7d ist dazu vorgesehen, beim Drehen der Seilrolle 6 entlang der Antriebs- oder Abtriebsrichtung AD, VD an einem ersten Anschlagsbereich 37 eines Kopplungsgliedes 35 anzuschlagen, über das der Anschlag 7d zur Begrenzung des Verstellweges der Seilrolle 6 mit einem gehäuseseitigen Gegenanschlag 7a zusammenwirken kann.

Das Kopplungsglied 35 umgreift den freien Endbereich 34 der Welle 33 quer zur Drehachse D ringförmig und weist eine dem Anschlag 7d zugewandte erste Seite 35a und eine dem Anschlag 7d abgewandte zweite Seite 35b auf, wobei der erste Anschlagsbereich 37 von der ersten Seite 35a des Kopplungsgliedes 35 entlang der Drehachse D absteht, und zwar entgegen gesetzt zum Anschlag 7d, so dass dieser beim Drehen der Seilrolle entlang der Antriebsrichtung AD oder entlang der Abtriebsrichtung VD am ersten Anschlagsbereich 37 anschlagen kann. Je nach Stellung des Anschlags 7d bezüglich des ersten Anschlagsbereiches 37 kann die Seilrolle 6 maximal um einen Drehwinkel von 360° gedreht werden, bevor der Anschlag 7d in Eingriff mit dem ersten Anschlagsbereich 37 tritt. Nach dem Anschlagen des Anschlags 7d am ersten Anschlagsbereich 37 nimmt die Seilrolle 6 das Kopplungsglied 35 bei weitergehender (gleichsinniger) Drehung der Seilrolle 6 mit. Dabei liegt das Kupplungsglied 35 - zum Zwecke seiner drehbaren Lagerung im Gehäuse 4 - mit seiner ersten Seite 35a an einer an der Innenseite 3e des inneren Bremsrades 3c vorgesehenen ersten Gleitfläche 7e sowie mit seiner zweiten Seite 35b an einer ringförmigen, am Gehäuse 4 ausgebildeten zweiten Gleitfläche 7e' an.

Zum Begrenzen der gemeinsamen Drehung des Kupplungsgliedes 35 und der Seilrolle 6 ist nun an der der ersten Seite 35a abgewandten zweiten Seite 35b des Kupplungsgliedes 35 ein zweiter Anschlagsbereich 38 vorgesehen, der entlang der Drehachse D von der zweiten Seite 35b des Kupplungsgliedes 35 absteht und zum Anschlagen am Gegenanschlag 7a des Gehäuses 4 vorgesehen ist. Da das Kupplungsglied 35 ebenfalls um maximal etwa 360° (in Bezug auf das Gehäuse 4) drehbar ist, bevor der zweite Anschlagsbereich 38 gegen den Gegenanschlag 7a stößt, resultiert aus der Verwendung des drehbaren Kopplungsgliedes 35 insgesamt ein maximaler Verstellweg der Seilrolle entlang oder entgegen der Antriebsrichtung AD von rund 720°. Damit der erste und der zweite Anschlagsbereich 37, 38 des Kopplungsgliedes 35 beim Verstellen der Seilrolle 6 definiert entlang des Verstellweges geführt werden können, ist am Gehäuse 4 eine (vom Gegenanschlag 7a unterbrochene) Führung 7c ausgebildet, an der entlang der zweite Anschlagsbereich 38 gleiten kann, und am inneren Bremsrad 3c ist eine dem ersten Anschlagsbereich 37 entlang der Drehachse D zugewandte, die Drehachse D ringförmig umlaufende Aussparung 3e' vorgesehen, in die der erste Anschlagsbereich 37 derart eingreift, dass er beim Verstellen der Seilrolle 6 bzw. des Kopplungsgliedes 35 durch die Aussparung 3e' geführt wird.

Natürlich können mehrere derartige Kopplungsglieder 35 verwendet werden, um den maximalen Verstellwinkel jeweils um weitere (annähernd) 360° zu verlängern.

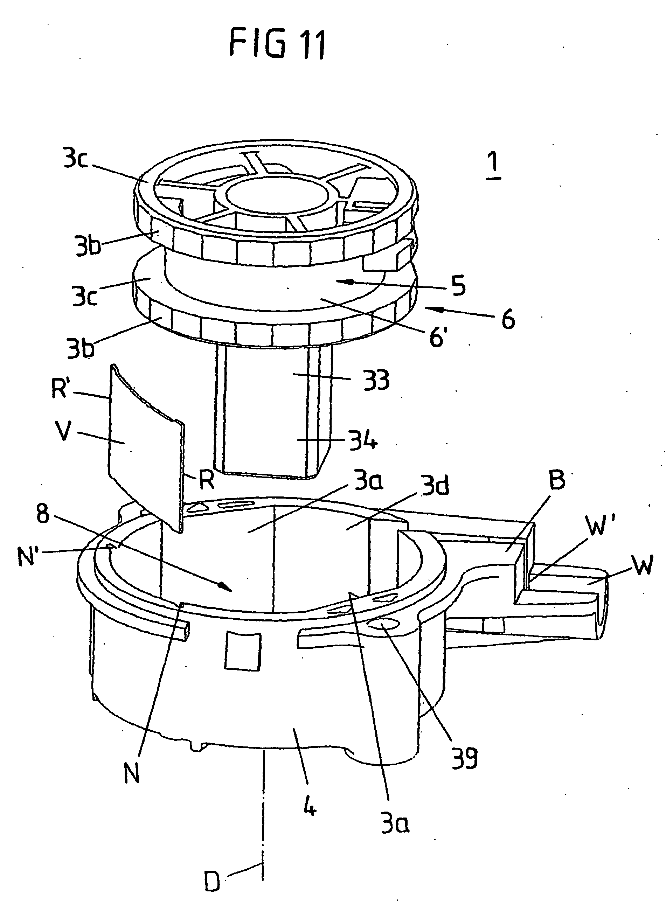

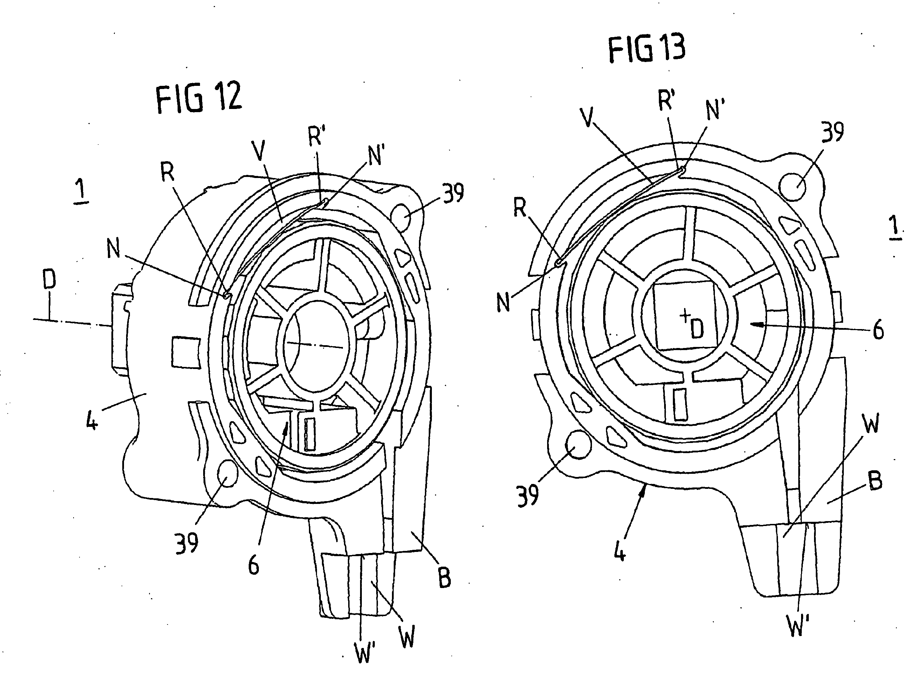

Figur 11 zeigt im Zusammenhang mit den Figuren 12 und 13 eine Abwandlung der in der Figur 6 bzw. den Figuren 8 bis 10 gezeigten Art, bei der im Unterschied zur Figur 6 bzw. den Figuren 8 bis 10 an der Innenseite 3d des Gehäuses 4 ein zusätzliches flächig ausgebildetes Vorspannelement V vorgesehen ist. Das Vorspannelement V ist gegen die Seilrolle 6 vorgespannt und drückt diese gegen die beiden schräg aufeinander zu laufenden Bremsflächen 3a, so dass die Seilrolle 6 auch bei geringer an der Sehne 13b entlang der Verlaufrichtung V angreifender Vorspannung in einer Nichtbetätigungsstellung mit den Bremsflächen 3a verkeilt ist (Form- und Reibschluss). Hierzu liegt das Vorspannelement V unter Vorspannung an den Außenflächen 3b der Bremsscheiben 3c der Seilrolle 6 an, wobei das Vorspannelement vorzugsweise als eine Blattfeder ausgebildet ist.

Zum Festlegen des Vorspannelementes V sind an der Innenseite 3d des Gehäuses 4 entlang der Drehachse D erstreckte Nuten N, N' ausgebildet, die quer zur Drehachse D sowohl einander als auch den Bremsflächen 3a gegenüberliegen. In diese Nuten N, N' ist das Vorspannelement V entlang der Drehachse D mit zwei entlang der Drehachse D erstreckten Randbereichen R, R' des Vorspannelementes V eingeführt, wobei die Nuten N, N' jeweils einen der beiden Randbereiche R, R' im Querschnitt umgreifen.

## Patentansprüche

1. Handverstellung für eine Lordosenstütze eines Fahrzeugsitzes, mit:
- einer Seilrolle (6), die wahlweise in eine Antriebsrichtung (AD) oder in eine der Antriebsrichtung (AD) entgegen gerichtete Abtriebsrichtung (VD) drehbar ist,
- einem der Seilrolle (6) zugeordnetem Zugmittel (13, 13a, 13b), das durch Drehung der Seilrolle (6) in Antriebsrichtung (AD) auf die Seilrolle (6)aufrollbar ist, wobei
- das Zugmittel (13, 13a, 13b) so mit einer Lordosenstütze (32) eines Fahrzeugsitzes koppelbar ist, dass die Drehung der Seilrolle (6) in An- und/oder Abtriebsrichtung ein Verstellen der Lordosenstütze (32) bewirkt, und
- einer Sperre (3a, 3b, 3c), die in einer Sperrstellung die Drehung der Seilrolle (6) in Abtriebsrichtung (VD) hemmt,
**dadurch gekennzeichnet, dass**
auf die Seilrolle (6) eine Vorspannung einwirkt, die ein Drehmoment der Seilrolle (6) in Abtriebsrichtung (VD) bewirkt, und dass die Sperre (3a, 3b, 3c) zwei keilförmig zueinander verlaufende Bremsflächen (3a) aufweist, wobei die Seilrolle (6) zwischen den beiden Bremsflächen (3a) angeordnet ist und in der Sperrstellung in Reibungskontakt mit den beiden Bremsflächen (3a) steht.

2. Handverstellung nach Anspruch 1, **dadurch gekennzeichnet, dass** die Vorspannung über das Zugmittel (13, 13a, 13b) auf die Seilrolle (6) einwirkt.

3. Handverstellung nach Anspruch 2, **dadurch gekennzeichnet, dass** das Zugmittel (13, 13a, 13b) mit einem Element (12'; 12") einer Lordosenverstelleinrichtung (10) zum Verstellen der Lordosenstütze (32) gekoppelt ist, wobei auf das Element (12'; 12") die Vorspannung einwirkt, die von dem Zugmittel (13, 13a, 13b) übertragen wird und auf die Seilrolle (6) einwirkt.

4. Handverstellung nach Anspruch 3, **dadurch gekennzeichnet, dass** die Vorspannung auf das Element (12'; 12") durch ein elastisches Spannelement (14) erzeugt wird.

5. Handverstellung nach Anspruch 3 oder 4, **dadurch gekennzeichnet, dass** das Element (12'; 12") als bewegbarer Gleiter (12'; 12") ausgebildet ist.

6. Handverstellung nach einem der vorangegangenen Ansprüche, **dadurch gekennzeichnet, dass** eine Drehung der Seilrolle (6) in Antriebsrichtung (AD) gegen das von der Vorspannung bewirkte Drehmoment in Abtriebsrichtung (VD) erfolgt.

7. Handverstellung nach Anspruch 1, **dadurch gekennzeichnet, dass** die Vorspannung die Handverstellung (1) in die Sperrstellung bringt.

8. Handverstellung nach Anspruch 1 oder 7, **dadurch gekennzeichnet, dass** die Handverstellung (1) automatisch die Sperrstellung einnimmt, wenn die Handverstellung (1) in einer Nichtbetätigungsstellung ruht.

9. Handverstellung nach Anspruch 1, **dadurch gekennzeichnet, dass** die Vorspannung die Seilrolle (6) in der Sperrstellung gegen die. Bremsflächen (3a) drückt.

10. Handverstellung nach Anspruch 1, **dadurch gekennzeichnet, dass** die Seilrolle (6) in der Sperrstellung zwischen den beiden Bremsflächen (3a) verkeilt ist.

11. Handverstellung nach einem der Ansprüche 1, 9 oder 10, **dadurch gekennzeichnet, dass** die Seilrolle (6) eine der Drehachse (D) abgewandte Außenfläche (3b) aufweist, die in der Sperrstellung in Reibungskontakt mit den Bremsflächen (3a) steht.

12. Handverstellung nach Anspruch 11, **dadurch gekennzeichnet, dass** die Außenfläche (3b) eine im Querschnitt rundliche oder polygonartige Kontur aufweist.

13. Handverstellung nach Anspruch 11 oder 12, **dadurch gekennzeichnet, dass** die Außenfläche (3b) und/oder die Bremsflächen (3a) elastisch ausgebildet sind.

14. Handverstellung nach einem der vorangegangenen Ansprüche, **gekennzeichnet durch** ein Gehäuse (4), das die Seilrolle (6) zumindest abschnittweise umgibt.

15. Handverstellung nach Anspruch 14, **dadurch gekennzeichnet, dass** die Bremsflächen (3a) am Gehäuse (4) der Handverstellung (1) ausgebildet sind.

16. Handverstellung nach einem der Ansprüche 9 bis 15 , **gekennzeichnet durch** ein gegen die Seilrolle (6) vorgespanntes Vorspannelement (V), das die Seilrollen (6) gegen die Bremsflächen (3a) drückt, um ein Herausbewegen der Seilrolle (6) aus der Sperrstellung zu verhindert.

17. Handverstellung nach Anspruch 16, **dadurch gekennzeichnet, dass** das Vorspannelement (V) quer zur Drehachse (D) den beiden Bremsflächen (3a) gegenüberliegt.

18. Handverstellung nach Anspruch 16 oder 17, **dadurch gekennzeichnet, dass** dar Vorspannelement (V) an einer der Seilrolle (6); quer zur Drehachse (D) gegenüberliegenden Innenseite (3d) des Gehäuses (4) festgelegt ist.

19. Handverstellung nach einem der Ansprüche16 bis 18, **dadurch gekennzeichnet, dass** das Vorspannelement (V) als Blattfeder ausgebildet ist.

20. Handverstellung nach Anspruch 18 und 19, **dadurch gekennzeichnet, dass** die Blattfeder (V) zum Festlegen der Blattfeder an der Innenseite (3d) mit einem entlang der Drehachse (D) erstreckten ersten Randbereich (R) in eine entlang der Drehachse (D) am Gehäuse (4) vorgesehene erste Nut (N) eingeführt ist und mit einem dem ersten Randbereich (R) quer zur Drehachse (D) gegenüberliegenden zweiten Randbereich (R') in eine entlang der Drehachse (D) am Gehäuse (4) vorgesehene zweite Nut (N') eingeführt ist.

21. Handverstellung nach Anspruch 1 oder einem der Ansprüche 7 bis 20, **dadurch gekennzeichnet, dass** eine Betätigung der Handverstellung (1) die Sperrstellung aufhebt.

22. Handverstellung nach einem der vorangegangenen Ansprüche, **gekennzeichnet durch** ein drehbares Handrad (2), dass so mit der Seilrolle (6) gekoppelt ist, dass ein Drehen des Handrads (2) eine Drehung der Seilrolle (6) bewirkt.

23. Handverstellung nach Anspruch 21 und 22, **dadurch gekennzeichnet, dass** die Sperre (3a, 3b, 3c) durch Drehen des Handrads (2) in An- und/oder Abtriebsrichtung (AD; VD) lösbar ist.

24. Handverstellung nach Anspruch 23, **dadurch gekennzeichnet, dass** durch ein Drehen des Handrads (2) gegen die Vorspannung die Drehung der Seilrolle (6) in Antriebsrichtung (AD) erfolgt:

25. Handverstellung nach Anspruch 8 und einem der Ansprüche 21 bis 24, **dadurch gekennzeichnet, dass** die Handverstellung (1) in der Nichtbetätigungsstellung ruht, wenn das Handrad (2) nicht betätigt, insbesondere nicht gedreht wird.

26. Handverstellung nach einem der vorangegangenen Ansprüche, **dadurch gekennzeichnet, dass** das Zugmittel (13, 13a, 13b) als Bowdenzug (13) ausgebildet ist, dessen Sehne (13b) an der Seilrolle (6) befestigt ist.

27. Handverstellung nach Anspruch 26, **gekennzeichnet durch** ein Gehäuse (4), gegen das sich das Hüllrohr (13a) des Bowdenzugs (13) abstützt.

28. Handverstellung nach einem der vorangegangenen Ansprüche, **gekennzeichnet durch** einen Anschlag (7d; 7b) der Seilrolle (6), der beim Drehen der Seilrolle (6) aus einer ersten Endposition in eine zweite Endposition zum Begrenzen des Verstellweges mit einem in Bezug auf die Drehachse (D) ruhenden Gegenanschlag (7a) zusammenwirkt.

29. Handverstellung nach Anspruch 28, **dadurch gekennzeichnet, dass** der Anschlag (7d) über ein zusätzliches um die Drehachse (D) drehbares Kopplungsglied (35) mit dem Gegenanschlag (7a) zusammenwirkt.

30. Handverstellung nach Anspruch 29, **dadurch gekennzeichnet, dass** das Kopplungsglied (35) einen mit dem Anschlag (7d) in Eingriff bringbaren ersten Anschlagsbereich (37) und einen mit dem Gegenanschlag (7a) in Eingriff bringbaren zweiten Anschlagsbereich (38) aufweist, und dass beim Drehen der Seilrolle (6) in Richtung auf die zweite Endposition der Anschlag (7d) der Seilrolle (6) mit dem ersten Anschlagsbereich (37) in Eingriff gelangt, so dass das Kopplungsglied (35) mitgenommen wird und die Seilrolle (6) und das Kopplungsglied (35) gemeinsam um die Drehachse (D) gedreht werden können, bis der zweite Anschlagsbereich (38) mit dem Gegenanschlag (7a) in Eingriff gelangt.

31. Handverstellung nach Anspruch 29 oder 30, **dadurch gekennzeichnet, dass** das Kopplungsglied (35) die Drehachse (D) zumindest abschnittsweise umläuft, insbesondere ringförmig umläuft.

32. Handverstellung nach einem der Ansprüche 29 bis 31, **dadurch gekennzeichnet, dass** das Kopplungsglied (35) die Seilrolle (6) im Querschnitt umgreift.

33. Handverstellung nach Anspruch 30 oder einem der Ansprüche 31 oder 32 soweit rückbezogen auf Anspruch 30, **dadurch gekennzeichnet, dass** der erste und der zweite Anschlagsbereich (37, 38) in einander entgegen gesetzten Richtungen entlang der Drehachse (D) vom Kopplungsglied (35) abstehen.

34. Handverstellung nach Anspruch 30 oder einem der Ansprüche 31 bis 33 soweit rückbezogen auf Anspruch 30, **dadurch gekennzeichnet, dass** der erste Anschlagsbereich (37) dem zweiten Anschlagsbereich (38) quer zur Drehachse (D) gegenüberliegt.

35. Handverstellung nach Anspruch 30 oder einem der Ansprüche 31 bis 34 soweit rückbezogen auf Anspruch 30, **dadurch gekennzeichnet, dass** der Anschlag (7d) entlang der Drehachse (D) von der Seilrolle (6) absteht, so dass der Anschlag (7d) beim Drehen der Seilrolle (6) in die zweite Endposition gegen den ersten Anschlagsbereich (37) des Kopplungsgliedes (35) drücken kann, um das Kopplungsglied (35) mitzunehmen.

36. Handverstellung nach Anspruch 14 oder einem der Ansprüche 15 bis 35 soweit rückbezogen auf Anspruch 14, **dadurch gekennzeichnet, dass** die Seilrolle (6) um die Drehachse (D) drehbar am Gehäuse (4) gelagert ist.

37. Handverstellung nach Anspruch 14 und nach Anspruch 28 oder einem der Ansprüche 29 bis 36 soweit rückbezogen auf Anspruch 28, **dadurch gekennzeichnet, dass** der Gegenanschlag (7a) am Gehäuse (4) ausgebildet ist.

38. Handverstellung nach Anspruch 14 und nach Anspruch 29 oder einem der Ansprüche 30 bis 37 soweit rückbezogen auf Anspruch 29, **dadurch gekennzeichnet, dass** das Kopplungsglied (35) um die Drehachse (D) drehbar im Gehäuse (4) gelagert ist.

39. Handverstellung nach Anspruch 14 und nach Anspruch 30 oder einem der Ansprüche 31 bis 38 soweit rückbezogen auf Anspruch 30, **dadurch gekennzeichnet, dass** das Gehäuse (4) eine Führung (7c) zum Führen des ersten Anschlagsbereiches (37) entlang des Verstellweges aufweist, an der entlang der erste Anschlagsbereich (37) gleiten kann.

40. Handverstellung nach Anspruch 39, **dadurch gekennzeichnet, dass** der Gegenanschlag (7a) entlang der Drehachse (D) von der Führung (7c) abragt, so dass der zweite Anschlagsbereich (38) beim Drehen des Kopplungsgliedes (35) in die zweite Endposition am Gegenanschlag (7a) anschlagen kann, um die Drehung des Kopplungsgliedes (35) zu begrenzen.

41. Handverstellung nach Anspruch 29 oder einem der Ansprüche 30 bis 40 soweit rückbezogen auf Anspruch 29, **dadurch gekennzeichnet, dass** der Anschlag über eine Mehrzahl um die Drehachse (D) drehbarer Kopplungsglieder mit dem Gegenanschlag (7a) zusammenwirkt, wobei eines der Kopplungsglieder einen mit dem Anschlag (7d) zusammenwirkenden ersten Anschlagsbereich und ein weiteres der Kopplungsglieder einen mit dem Gegenanschlag (7a) zusammenwirkenden zweiten Anschlagsbereich aufweist.

## Claims

1. A manual adjustment of a back support on a vehicle seat comprising:
- a cable pulley (6) which is selectively rotatable in a drive direction (AD) or in a driven direction (VD) oriented counter to the drive direction (AD),
- a tensile means (13, 13a, 13b) associated with the cable pulley (6), which may be rolled up onto the cable pulley by rotating the cable pulley (6) in the drive direction (AD), wherein
- the tensile means (13, 13a, 13b) being able to be coupled to a back support (32) of a vehicle seat such that the rotation of the cable pulley (6) in the drive direction and/or driven direction effects an adjustment of the back support (32), and
- a lock (3a, 3b, 3c) which in a locked position restricts the rotation of the cable pulley (6) in the driven direction (VD),
**characterized in that**
a pretensioning acts on the cable pulley (6) which produces a torque of the cable pulley (6) in the driven direction (VD), and the lock (3a, 3b, 3c) comprises two braking surfaces (3a) extending toward one another in a wedge-shaped manner, wherein the cable pulley (6) being arranged between the two braking surfaces (3a) and in the locked position being in frictional contact with both braking surfaces (3a).

2. The manual adjustment as claimed in claim 1, **characterized in that** the pretensioning acts on the cable pulley (6) via the tensile means (13, 13a, 13b).

3. The manual adjustment as claimed in claim 2, **characterized in that** the tensile means (13, 13a, 13b) is coupled to an element (12', 12") of a lumbar adjustment device (10) for adjusting the back support (32), the pretensioning acting on the element (12'; 12") which is transmitted by the tensile means (13, 13a, 13b) and acts on the cable pulley (6).

4. The manual adjustment as claimed in claim 3, **characterized in that** the pretensioning is produced on the element (12'; 12") by a resilient tensioning element (14).

5. The manual adjustment as claimed in claim 3 or 4, **characterized in that** the element (12'; 12") is configured as a movable slide (12'; 12").

6. The manual adjustment as claimed in one of the preceding claims, **characterized in that** a rotation of the cable pulley (6) in the drive direction (AD) takes place counter to the torque produced by the pretensioning in the driven direction (VD).

7. The manual adjustment as claimed in claim 1, **characterized in that** the pretensioning moves the manual adjustment (1) into the locked position.

8. The manual adjustment as claimed in claim 1 or 7, **characterized in that** the manual adjustment (1) automatically adopts the locked position when the manual adjustment (1) is stationary in a non-actuated position.

9. The manual adjustment as claimed in claim 1, **characterized in that** in the locked position the pretensioning presses the cable pulley (6) against the braking surfaces (3a).

10. The manual adjustment as claimed in claim 1, **characterized in that** the cable pulley (6) is wedged in the locked position between both braking surfaces (3a).

11. The manual adjustment as claimed in one of claims 1, 9 or 10, **characterized in that** the cable pulley (6) has an external surface (3b) remote from the rotational axis (D), which in the locked position is in frictional contact with the braking surfaces (3a).

12. The manual adjustment as claimed in claim 11, **characterized in that** the external surface (3b) has a round or polygonal-type contour in cross section.

13. The manual adjustment as claimed in claim 11 or 12, **characterized in that** the external surface (3b) and/or the braking surfaces (3a) are of resilient configuration.

14. The manual adjustment as claimed in one of the preceding claims, **characterized by** a housing (4) which at least partially surrounds the cable pulley (6).

15. The manual adjustment as claimed in claim 14, **characterized in that** the braking surfaces (3a) are configured on the housing (4) of the manual adjustment (1) .

16. The manual adjustment as claimed in one of claims 9 to 15, **characterized by** a pretensioning element (V) pretensioned against the cable pulley (6), which presses the cable pulley (6) against the braking surfacees (3a) in order to prevent the cable pulley (6) from moving out of the locked position.

17. The manual adjustment as claimed in claim 16, **characterized in that** the pretensioning element (V) opposes the two braking surfaces (3a) transversely to the rotational axis (D).

18. The manual adjustment as claimed in claim 16 or 17, **characterized in that** the pretensioning element (V) is secured to an inner face (3d) of the housing (4) opposing the cable pulley (6), transversely to the rotational axis (D).

19. The manual adjustment as claimed in one of claims 16 to 18, **characterized in that** the pretensioning element (V) is configured as a leaf spring.

20. The manual adjustment as claimed in claim 18 and 19, **characterized in that** for securing the leaf spring on the inner face (3d) to a first edge region (R) extending along the rotational axis (D), the leaf spring (V) is inserted into a first groove (N) provided along the rotational axis (D) on the housing (4), and to a second edge region (R') opposing the first edge region (R) transversely to the rotational axis (D), he leaf spring is inserted into a second groove (N') provided along the rotational axis (D) on the housing (4).

21. The manual adjustment as claimed in claim 1 or one of claims 7 to 20, **characterized in that** an actuation of the manual adjustment (1) releases the locked position.

22. The manual adjustment as claimed in one of the preceding claims, **characterized by** a rotatable hand wheel (2) which is coupled to the cable pulley (6) such that a rotation of the hand wheel (2) causes a rotation of the cable pulley (6).

23. The manual adjustment as claimed in claim 21 and 22, **characterized in that** the lock (3a, 3b, 3c) may be released by rotating the hand wheel (2) in the drive direction and/or driven direction (AD; VD).

24. The manual adjustment as claimed in claim 23, **characterized in that** the rotation of the cable pulley (6) takes place in the drive direction (AD) by rotation of the hand wheel (2) counter to the pretensioning.

25. The manual adjustment as claimed in claim 8 and one of claims 21 to 24, **characterized in that** the manual adjustment (1) is stationary in the non-actuated position, when the hand wheel (2) is not actuated, in particular is not rotated.

26. The manual adjustment as claimed in one of the preceding claims, **characterized in that** the tensile means (13, 13a, 13b) is configured as a Bowden cable (13), the core (13b) thereof being fastened to the cable pulley (6).

27. The manual adjustment as claimed in claim 26, **characterized by** a housing (4) against which the sheath (13a) of the Bowden cable (13) is supported.

28. The manual adjustment as claimed in one of the preceding claims, **characterized by** a stop (7d; 7b) of the cable pulley (6) which, when rotating the cable pulley (6) from a first end position into a second end position for limiting the adjustment path, cooperates with a counter stop (7a) which is stationary relative to the rotational axis (D).

29. The manual adjustment as claimed in claim 28, **characterized in that** the stop (7d) cooperates with the counter stop (7a) via an additional coupling member (35) which may be rotated about the rotational axis (D).

30. The manual adjustment as claimed in claim 29, **characterized in that** the coupling member (35) has a first stop region (37) which may be brought into engagement with the stop (7d) and a second stop region (38) which may be brought into engagement with the counter stop (7a), and **in that** when rotating the cable pulley (6) in the direction of the second end position the stop (7d) of the cable pulley (6) comes into engagement with the first stop region (37), so that the coupling member (35) is driven and the cable pulley (6) and the coupling member (35) may be rotated together about the rotational axis (D) until the second stop region (38) comes into engagement with the counter stop (7a).

31. The manual adjustment as claimed in claim 29 or 30, **characterized in that** the coupling member (35) at least partially surrounds the rotational axis (D), in particular surrounds said rotational axis in an annular manner.

32. The manual adjustment as claimed in one of claims 29 to 31, **characterized in that** the coupling member (35) encompasses the cable pulley (6) in cross section.

33. The manual adjustment as claimed in claim 30 or one of claims 31 or 32, referring back to claim 30, **characterized in that** the first and the second stop regions (37, 38) project from the coupling member (35) in opposing directions along the rotational axis (D).

34. The manual adjustment as claimed in claim 30 or one of claims 31 to 33, referring back to claim 30, **characterized in that** the first stop region (37) opposes the second stop region (38) transversely to the rotational axis (D).

35. The manual adjustment as claimed in claim 30 or one of claims 31 to 34, referring back to claim 30, **characterized in that** the stop (7d) projects from the cable pulley (6) along the rotational axis (D) so that, when rotating the cable pulley (6) into the second end position, the stop (7d) is able to press against the first stop region (37) of the coupling member (35) in order to drive the coupling member (35).

36. The manual adjustment as claimed in claim 14 or one of claims 15 to 35, referring back to claim 14, **characterized in that** the cable pulley (6) is rotatably mounted on the housing (4) about the rotational axis (D).

37. The manual adjustment as claimed in claim 14 and as claimed in claim 28 or one of claims 29 to 36, referring back to claim 28, **characterized in that** the counter stop (7a) is configured on the housing (4).

38. The manual adjustment as claimed in claim 14 and as claimed in claim 29 or one of claims 30 to 37, referring back to claim 29, **characterized in that** the coupling member (35) is rotatably mounted in the housing (4) about the rotational axis (D).

39. The manual adjustment as claimed in claim 14 and as claimed in claim 30 or one of claims 31 to 38, referring back to claim 30, **characterized in that** the housing (4) has a guide (7c) for guiding the first stop region (37) along the adjustment path, along which the first stop region (37) may slide.

40. The manual adjustment as claimed in claim 39, **characterized in that** the counter stop (7a) projects from the guide (7c) along the rotational axis (D) so that the second stop region (38), when rotating the coupling member (35) into the second end position, may strike against the counter stop (7a), in order to limit the rotation of the coupling member (35).

41. The manual adjustment as claimed in claim 29 or one of claims 30 to 40, referring back to claim 29, **characterized in that** the stop cooperates with the counter stop (7a) via a plurality of coupling members which may be rotated about the rotational axis (D), one of the coupling members comprising a first stop region cooperating with the stop (7d) and a further coupling member comprising a second stop region cooperating with the counter stop (7a).

## Revendications

1. Système de réglage manuel conçu pour un appui lombaire d'un siège de véhicule, avec
- une poulie (6) qui peut être tournée au choix dans un sens d'entraînement (AD) ou dans un sens de sortie (VD) dirigé dans le sens inverse d'entraînement (AD),
- un moyen de traction (13, 13a, 13b) associé à la poulie (6) qui peut être enroulé par la rotation de la poulie (6) dans le sens d'entraînement (AD) sur la poulie (6),
- le moyen de traction (13, 13a, 13b) pouvant être couplé à un appui lombaire (32) d'un siège de véhicule de sorte que la rotation de la poulie (6) provoque dans le sens d'entraînement et/ou de sortie un réglage de l'appui lombaire (32), et
- un blocage (3a, 3b, 3c) qui bloque dans une position de blocage la rotation de la poulie (6) dans le sens de sortie (VD),
**caractérisé en ce que**
une précontrainte agit sur la poulie, laquelle provoque un couple de la poulie (6) dans le sens de sortie (VD) et **en ce que** le blocage (3a, 3b, 3c) présente deux surfaces de freinage (3a) s'étendant en forme de coin l'une par rapport à l'autre, la poulie (6) étant disposée entre les deux surfaces de freinage (3a) et se trouvant en contact de friction avec les deux surfaces de freinage (3a) dans la position de blocage.

2. Système de réglage manuel selon la revendication 1, **caractérisé en ce que** la précontrainte agit par le biais du moyen de traction (13, 13a, 13b) sur la poulie (6).

3. Système de réglage manuel selon la revendication 2, **caractérisé en ce que** le moyen de traction (13, 13a, 13b) est couplé à un élément (12' ; 12") d'un dispositif de réglage de lombaire (10) pour le réglage de l'appui lombaire (32), la précontrainte agissant sur l'élément (12' ; 12"), laquelle est transmise par le moyen de traction (13, 13a, 13b) et agit sur la poulie (6).

4. Système de réglage manuel selon la revendication 3, **caractérisé en ce que** la précontrainte est générée sur l'élément (12' ; 12") par un élément de tension (14) élastique.

5. Système de réglage manuel selon la revendication 3 ou 4, **caractérisé en ce que** l'élément (12' ; 12") est réalisé comme un dispositif glissant (12' ; 12") mobile.

6. Système de réglage manuel selon l'une quelconque des revendications précédentes, **caractérisé en ce qu'**une rotation de la poulie (6) dans le sens d'entraînement (AD) est effectuée à l'encontre du couple provoqué par la précontrainte dans le sens de sortie (VD).

7. Système de réglage manuel selon la revendication 1, **caractérisé en ce que** la précontrainte amène le système de réglage manuel (1) dans la position de blocage.

8. Système de réglage manuel selon la revendication 1 ou 7, **caractérisé en ce que** le système de réglage manuel (1) occupe automatiquement la position de blocage si le système de réglage manuel (1) demeure dans une position de non actionnement.

9. Système de réglage manuel selon la revendication 1, **caractérisé en ce que** la précontrainte presse la poulie (6) dans la position de blocage contre les surfaces de freinage (3 a).

10. Système de réglage manuel selon la revendication 1, **caractérisé en ce que** la poulie (6) est coincée dans la position de blocage entre les deux surfaces de freinage (3a).

11. Système de réglage manuel selon l'une quelconque des revendications 1, 9 ou 10, **caractérisé en ce que** la poulie (6) présente une surface extérieure (3b) éloignée de l'axe de rotation (D), qui se trouve en contact de friction avec les surfaces de freinage (3a) dans la position de blocage.

12. Système de réglage manuel selon la revendication 11, **caractérisé en ce que** la surface extérieure (3b) présente un contour de section arrondie ou polygonale.

13. Système de réglage manuel selon la revendication 11 ou 12, **caractérisé en ce que** la surface extérieure (3b) et/ou les surfaces de freinage (3a) sont réalisées de manière élastique.

14. Système de réglage manuel selon l'une quelconque des revendications précédentes, **caractérisé par** un boîtier (4) qui entoure au moins par endroits la poulie (6).

15. Système de réglage manuel selon la revendication 14, **caractérisé en ce que** les surfaces de freinage (3a) sont réalisées sur le boîtier (4) du système de réglage manuel (1).

16. Système de réglage manuel selon l'une quelconque des revendications 9 à 15, **caractérisé par** un élément de précontrainte (V) précontraint contre la poulie (6), qui presse la poulie (6) contre les surfaces de freinage (3a) afin d'empêcher une sortie de la poulie de la position de blocage.

17. Système de réglage manuel selon la revendication 16, **caractérisé en ce que** l'élément de précontrainte (V) fait face, transversalement à l'axe de rotation (D), aux deux surfaces de freinage (3a).

18. Système de réglage manuel selon la revendication 16 ou 17, **caractérisé en ce que** l'élément de précontrainte (V) est fixé sur un côté intérieur (3d) opposé à la poulie (6) transversalement à l'axe de rotation (D) du boîtier (4).

19. Système de réglage manuel selon l'une quelconque des revendications 16 à 18, **caractérisé en ce que** l'élément de précontrainte (V) est réalisé comme un ressort à lames.

20. Système de réglage manuel selon les revendications 18 et 19, **caractérisé en ce que** le ressort à lames (V) est introduit pour sa fixation sur le côté intérieur (3d) avec une première zone de bord (R) étendue le long de l'axe de rotation (D) dans une première rainure (N) prévue le long de l'axe de rotation (D) sur le boîtier (4) et est introduit avec une seconde zone de bord (R') opposée à la première zone de bord (R) transversalement à l'axe de rotation (D) dans une seconde rainure (N') prévue le long de l'axe de rotation (D) sur le boîtier (4).

21. Système de réglage manuel selon la revendication 1 ou l'une quelconque des revendications 7 à 20, **caractérisé en ce qu'**un actionnement du système de réglage manuel (1) supprime la position de blocage.

22. Système de réglage manuel selon l'une quelconque des revendications précédentes, **caractérisé par** un volant à main (2) rotatif qui est couplé à la poulie (6) de sorte qu'une rotation du volant à main (2) provoque une rotation de la poulie.

23. Système de réglage manuel selon les revendications 21 et 22, **caractérisé en ce que** le blocage (3a, 3b, 3c) peut être relaché par la rotation du volant à main (2) dans le sens d'entraînement et/ou de sortie (AD ; VD).

24. Système de réglage manuel selon la revendication 23, **caractérisé en ce que** la rotation de la poulie (6) est effectuée dans le sens d'entraînement (AD) grâce une rotation du volant à main (2) contre la précontrainte,.

25. Système de réglage manuel selon la revendication 8 et l'une quelconque des revendications 21 à 24, **caractérisé en ce que** le système de réglage manuel (1) demeure dans la position de non actionnement si le volant à main (2) n'est pas actionné, en particulier n'est pas tourné.

26. Système de réglage manuel selon l'une quelconque des revendications précédentes, **caractérisé en ce que** le moyen de traction (13, 13a, 13b) est réalisé comme un câble Bowden (13), dont la corde (13b) est fixée sur la poulie (6).

27. Système de réglage manuel selon la revendication 26, **caractérisé par** un boîtier (4) contre lequel s'appuie la gaine (13a) du câble Bowden (13).

28. Système de réglage manuel selon l'une quelconque des revendications précédentes, **caractérisé par** une butée (7d ; 7b) de la poulie (6) qui coopère lors de la rotation de la poulie (6) d'une première position finale à une seconde position finale pour limiter la course de réglage avec une butée antagoniste (7a) reposant par rapport à l'axe de rotation (D).

29. Système de réglage manuel selon la revendication 28, **caractérisé en ce que** la butée (7d) coopère par le biais d'un organe de couplage (35) supplémentaire, rotatif autour de l'axe de rotation (D) avec la butée antagoniste (7a).

30. Système de réglage manuel selon la revendication 29, **caractérisé en ce que** l'organe de couplage (35) présente une première zone de butée (37) pouvant être amenée en engagement avec la butée (7d) et une seconde zone de butée (38) pouvant être amenée en engagement avec la butée antagoniste (7a) et **en ce que** la poulie (6) parvient en engagement lors de la rotation de la poulie (6) en direction de la seconde position finale de la butée (7d) avec la première zone de butée (37) de sorte que l'organe de couplage (35) soit entraîné et la poulie (6) et l'organe de couplage (35) puissent être tournés conjointement autour de l'axe de rotation (D) jusqu'à ce que la seconde zone de butée (38) parvienne en engagement avec la butée antagoniste (7a).

31. Système de réglage manuel selon la revendication 29 ou 30, **caractérisé en ce que** l'organe de couplage (35) entoure au moins par endroits l'axe de rotation (D), en particulier l'entoure comme un anneau.

32. Système de réglage manuel selon l'une quelconque des revendications 29 à 31, **caractérisé en ce que** l'organe de couplage (35) entoure en section la poulie (6).

33. Système de réglage manuel selon la revendication 30 ou l'une quelconque des revendications 31 ou 32 dans la mesure où elle dépend de la revendication 30, **caractérisé en ce que** la première et la seconde zones de butée (37, 38) sont éloignées dans des directions opposées l'une à l'autre le long de l'axe de rotation (D) de l'organe de couplage (35).

34. Système de réglage manuel selon la revendication 30 ou l'une quelconque des revendications 31 à 33 dans la mesure où elles dépendent de la revendication 30, **caractérisé en ce que** la première zone de butée (37) fait face à la seconde zone de butée (38) transversalement à l'axe de rotation (D).

35. Système de réglage manuel selon la revendication 30 ou l'une quelconque des revendications 31 à 34 dans la mesure où elles dépendent de la revendication 30, **caractérisé en ce que** la butée (7d) est éloignée le long de l'axe de rotation (D) de la poulie (6) de sorte que la butée (7d) puisse presser lors de la rotation de la poulie (6) dans la seconde position finale contre la première zone de butée (37) de l'organe de couplage (35) afin d'entraîner l'organe de couplage (35).

36. Système de réglage manuel selon la revendication 14 ou l'une quelconque des revendications 15 à 35 dans la mesure où elles dépendent de la revendication 14, **caractérisé en ce que** la poulie (6) est logée de manière rotative autour de l'axe de rotation (D) sur le boîtier (4).

37. Système de réglage manuel selon la revendication 14 et selon la revendication 28 ou l'une quelconque des revendications 29 à 36 dans la mesure où elles dépendent de la revendication 28, **caractérisé en ce que** la butée antagoniste (7a) est réalisée sur le boîtier (4).

38. Système de réglage manuel selon la revendication 14 et selon la revendication 29 ou l'une quelconque des revendications 30 à 37 dans la mesure où elles dépendent de la revendication 29, **caractérisé en ce que** l'organe de couplage (35) est logé de manière rotative autour de l'axe de rotation (D) dans le boîtier (4).

39. Système de réglage manuel selon la revendication 14 et la revendication 30 ou l'une quelconque des revendications 31 à 38 dans la mesure où elles dépendent de la revendication 30, **caractérisé en ce que** le boîtier (4) présente un guidage (7c) pour le guidage de la première zone de butée (37) le long de la course de réglage, sur laquelle peut glisser la première zone de butée (37).

40. Système de réglage manuel selon la revendication 39, **caractérisé en ce que** la butée antagoniste (7a) dépasse le long de l'axe de rotation (D) du guidage (7c) de sorte que la seconde zone de butée (38) puisse buter lors de la rotation de l'organe de couplage (35) dans la seconde position finale contre la butée antagoniste (7a) afin de limiter la rotation de l'organe de couplage (35).

41. Système de réglage manuel selon la revendication 29 ou l'une quelconque des revendications 30 à 40 dans la mesure où elles dépendent de la revendication 29, **caractérisé en ce que** la butée coopère par une pluralité d'organes de couplage rotatifs autour de l'axe de rotation (D) avec la butée antagoniste (7a), l'un des organes de couplage présentant une première zone de butée coopérant avec la butée (7d) et un autre des organes de couplage présentant une seconde zone de butée coopérant avec la butée antagoniste (7a).
